# EUROPEAN PATENT SPECIFICATION

(11) **EP 4 205 523 B1**
(45) Date of publication and mention of the grant of the patent: **22.10.2025**
(21) Application number: 22210987.8
(22) Date of filing: 02.12.2022
(51) Int. Cl.: A01B 69/00, G01S 19/42, A01B 79/00, G05D 1/00, A01B 69/04

(54) **AGRICULTURAL ASSISTANCE SYSTEM**
LANDWIRTSCHAFTLICHES ASSISTENZSYSTEM
SYSTÈME D'ASSISTANCE AGRICOLE

(30) Priority: 28.12.2021 JP 2021214363
(43) Date of publication of application: 05.07.2023
(73) Proprietor: Kubota Corporation, Osaka-shi, Osaka 556-8601 (JP)
(72) Inventor: SAKUTA, Ken, Osaka, 5900823 (JP); YOSHIMURA, Fumiya, Osaka, 5900823 (JP); TATESHIMA, Masaya, Osaka, 5900823 (JP); KUBOSHIMA, Ryo, Osaka, 5900823 (JP)
(74) Representative: Müller-Boré & Partner Patentanwälte PartG mbB

(56) References cited:
- EP-A1- 3 744 160
- CN-B- 105 684 587
- US-A1- 2017 168 501
- US-A1- 2021 278 860

## Description

### BACKGROUND OF THE INVENTION

### Field of the Invention

The present invention relates to an agricultural assistance system which provides assistance in performing an agricultural job with an agricultural machine traveling over an agricultural field.

### Description of the related art

Japanese Unexamined Patent Application Publication No. 2018-116613 (Patent Literature 1) discloses a system to provide assistance in performing an agricultural job with a working device linked to an agricultural machine while causing the agricultural machine to travel over an agricultural field. The system disclosed in Patent Literature 1 includes: a travel route generator to generate a travel route for the agricultural machine based on information and conditions such as outline data of the agricultural field and the work width of the agricultural machine; an interruption information recorder to record interruption information including the interruption of the job/travel performed by the agricultural machine based on the travel route; an interruption information extractor to extract the interruption information from the interruption information recorder; an information display unit to display the extracted interruption information; a resumption information generator to generate resumption information for resumption of the job/travel interrupted based on the interruption information and cause the information display unit to display the resumption information; and a job/travel controller to cause the agricultural machine to perform the job/travel based on the resumption information.

US 2017/168501 A1 discloses a method for setting a travel path of an unmanned work vehicle for when an operation is carried out by the autonomously-traveling unmanned work vehicle together with a manned work vehicle that accompanies the unmanned work vehicle.

EP 3 744 160 A1 discloses an agriculture support device including a traveling creator to create a scheduled traveling route of an agricultural machine in an agricultural field, a display controller to display on an external terminal a virtual traveling status of the agricultural machine to travel on the scheduled traveling route created by the traveling creator, and a correction permitting controller to permit correction of the scheduled traveling route created by the traveling creator when the external terminal requests the correction.

### SUMMARY OF THE INVENTION

There is a demand to change the pre-set size information of the working device in the system during the interruption of the agricultural job performed by the agricultural machine and the working device because of, for example, replacement or maintenance of the working device or some other reasons. However, if the user changes the size information of the working device during the interruption of the agricultural job and then, for example, the agricultural job is to be resumed after a long time, the user may forget that the user has changed the size information. Furthermore, for example, if a different person from the user who has changed the size information of the working device during the interruption of the agricultural job is about to resume the agricultural job, that person may not notice that the size information of the working device has been changed. If this is the case, for example, the travel route for the agricultural machine at the time of the resumption of the agricultural job may be different from what is expected by the user or the size information of the working device set in the system may be different from the size of the working device to be actually used, which may result in reduced convenience.

Preferred embodiments of the present invention provide improved convenience when an agricultural job performed by an agricultural machine and a working device is interrupted and then resumed. The present invention is defined by the independent claim. Preferred embodiments are defined in the dependent claims.

Preferred embodiments of the present invention make it possible to improve convenience when an agricultural job performed by an agricultural machine and a working device is interrupted and then resumed.

The above and other elements, features, steps, characteristics and advantages of the present invention will become more apparent from the following detailed description of the preferred embodiments with reference to the attached drawings.

### BRIEF DESCRIPTION OF THE DRAWINGS

A more complete appreciation of preferred embodiments of the present invention and many of the attendant advantages thereof will be readily obtained as the same becomes better understood by reference to the following detailed description when considered in connection with the accompanying drawings described below.
FIG. 1 is a block diagram of an agricultural assistance system.
FIG. 2 is a perspective view of a lifting device.
FIG. 3 illustrates an example of a home screen.
FIG. 4 illustrates an example of a "select job" screen.
FIG. 5A illustrates an example of a "confirm vehicle settings" screen.
FIG. 5B illustrates an example of a "select working device" screen.
FIG. 5C illustrates an example of a "confirm working device settings" screen.
FIG. 5D illustrates an example of a "width settings" screen.
FIG. 5E illustrates an example of a "length settings" screen.
FIG. 5F illustrates an example of a "type settings" screen.
FIG. 5G illustrates an example of the "confirm working device settings" screen after the change of setting(s).
FIG. 6 illustrates an example of a "select agricultural field" screen.
FIG. 7 illustrates an example of a "route creation 1" screen.
FIG. 8A illustrates an example of a "route creation 2" screen.
FIG. 8B illustrates an example of the "route creation 2" screen.
FIG. 9A is an illustration of how areas and a travel route are set.
FIG. 9B is an illustration of how areas and a travel route are set.
FIG. 9C is an illustration of how areas and a travel route are set.
FIG. 9D is an illustration of how areas and a travel route are set.
FIG. 10 illustrates an example of a "confirm automatic operation settings" screen.
FIG. 11 illustrates an example of a "travel control" screen.
FIG. 12A is an illustration of automatic operation of an agricultural machine.
FIG. 12B is an illustration of the automatic operation of the agricultural machine.
FIG. 12C is an illustration of the automatic operation of the agricultural machine.
FIG. 12D is an illustration of the automatic operation of the agricultural machine.
FIG. 13 illustrates another example of the "travel control" screen.
FIG. 14A illustrates an example of interruption data.
FIG. 14B illustrates an example of interruption data.
FIG. 15 illustrates another example of the home screen.
FIG. 16 illustrates a "select interrupted job" screen.
FIG. 17A illustrates an example of a "details of interrupted job" screen.
FIG. 17B illustrates another example of the "details of interrupted job" screen.
FIG. 17C illustrates another example of the "details of interrupted job" screen.
FIG. 18 illustrates another example of the "travel control" screen.
FIG. 19 illustrates another example of the interruption data.
FIG. 20 is a side view of an agricultural machine.

### DETAILED DESCRIPTION OF THE PREFERRED EMBODIMENTS

The preferred embodiments will now be described with reference to the accompanying drawings, wherein like reference numerals designate corresponding or identical elements throughout the various drawings. The drawings are to be viewed in an orientation in which the reference numerals are viewed correctly.

The following description discusses preferred embodiments of the present invention with reference to drawings.

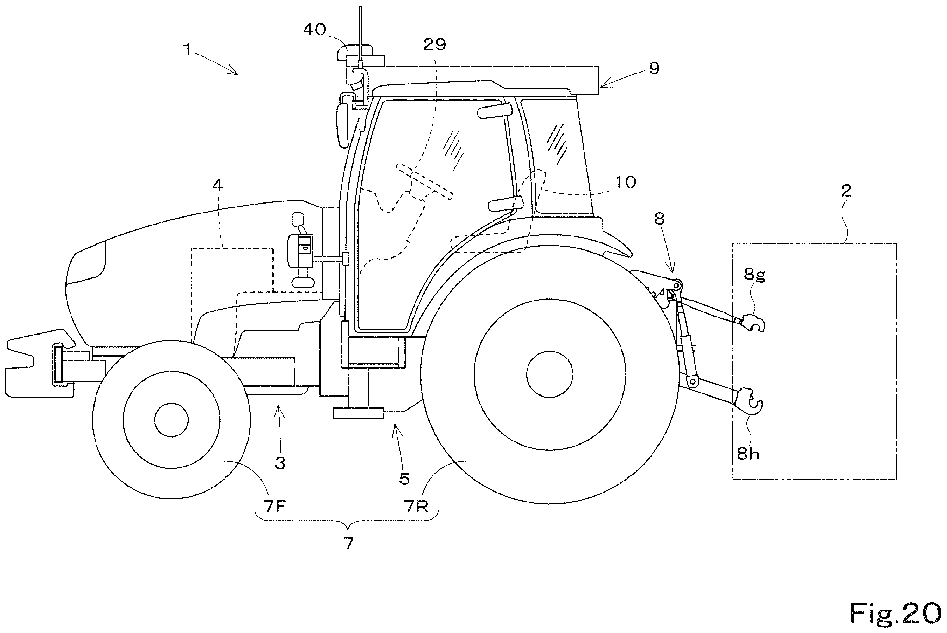

First, an agricultural machine 1 according to the present embodiment is discussed. FIG. 20 is a side view of the agricultural machine 1. The agricultural machine 1 is a tractor. Note that the agricultural machine 1 is not limited to a tractor, and may be, for example, some other agricultural machine such as a rice transplanter or a combine, a working vehicle which performs agricultural jobs other than the tractor, or the like.

The agricultural machine 1 includes a traveling vehicle body 3, a prime mover 4, a transmission 5, and a traveling device 7. The traveling device 7 includes front wheels 7F and rear wheels 7R. The front wheels 7F may be tire wheels or crawler wheel(s). The rear wheels 7R may also be tire wheels or crawler wheel(s). The prime mover 4 is a diesel engine, an electric motor, and/or the like. In the present embodiment, the prime mover 4 is a diesel engine. The transmission 5 is capable of changing the propelling force of the traveling device 7 by changing speed stages, and is also capable of switching between forward travel and rearward travel of the traveling device 7. The driving force from the prime mover 4 is transmitted to the traveling device 7 via the transmission 5 to drive the traveling device 7, causing the traveling vehicle body 3 to travel forward or rearward. Note that the left side of FIG. 20 corresponds to the front of the traveling vehicle body 3, and the right side of FIG. 20 corresponds to the rear of the traveling vehicle body 3.

The traveling vehicle body 3 is provided with a cabin 9. The cabin 9 is provided with an operator's seat 10 therein. The traveling vehicle body 3 is provided, at the rear thereof, a lifting device 8 which is a three-point linkage and/or the like. The lifting device 8 includes connectors 8g and 8h to which a working device 2 to perform an agricultural job can be connected. When the working device 2 is connected to the connectors 8g and 8h, the working device 2 and the traveling vehicle body 3 (agricultural machine 1) are linked together to allow the traveling vehicle body 3 to tow the working device 2.

The working device 2 does ground work (work may be hereinafter referred to as a "job") on an agricultural field. Examples of the working device 2 include tillers (rotary tillers) for tilling in an agricultural field, stubble cultivators for stubble cultivation, harrows for puddling, spreaders for spreading fertilizer, agricultural chemicals, and/or the like, seeders for seeding, transplanters for transplanting seedlings, and harvesters for harvesting.

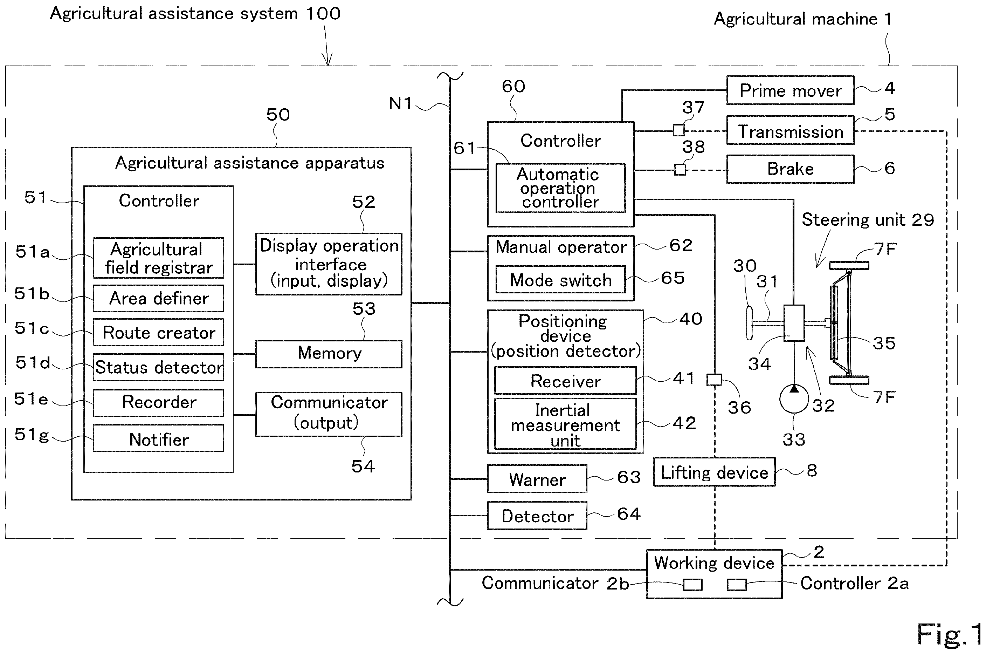

Next, an agricultural assistance system 100 according to the present embodiment is discussed. FIG. 1 is a block diagram of the agricultural assistance system 100. The agricultural assistance system 100 includes an agricultural assistance apparatus 50. The agricultural assistance system 100 and the agricultural assistance apparatus 50 provide assistance in performing an agricultural job with the working device 2 while causing the agricultural machine 1 to travel in an agricultural field.

The agricultural machine 1 includes a controller 60, a manual operator 62, the prime mover 4, the transmission 5, a brake 6, a steering unit 29, the lifting device 8, a positioning device 40, a warner 63, and a detector 64. On the agricultural machine 1, there is an in-vehicle network N1 such as local area network (LAN) or control area network (CAN). The controller 60, the manual operator 62, the positioning device 40, the warner 63, and the detector 64 are connected to the in-vehicle network N1. Such elements of the agricultural machine 1 are included in the agricultural assistance system 100.

The controller 60 includes an electric circuit including a central processing unit (CPU) (or a microcomputer) and one or more memories, and/or the like. Examples of the one or more memories of the controller 60 include volatile memories and nonvolatile memories. The controller 60 controls operation of the elements of the agricultural machine 1. The controller 60 includes an automatic operation controller 61 to control travel of the agricultural machine 1 and operation of the working device 2. The manual operator 62 includes switch(es), lever(s), pedal(s), other key(s), and/or the like that can be operated by a user such as a human operator seated on the operator's seat 10 or a worker in the vicinity of the agricultural machine 1. The manual operator 62 includes a mode switch 65. The mode switch 65 is operated to switch the agricultural machine 1 between different modes.

The prime mover 4 (engine) is controlled by the controller 60 in terms of driving, stopping, and rotation speed. The transmission 5 is connected to control valve(s) 37. The control valve 37 is a solenoid valve actuated based on a control signal sent from the controller 60. The control valve 37 is supplied with hydraulic fluid delivered by a hydraulic pump 33. The control valve 37 in FIG. 1 is represented by a single block, but a plurality of the control valves 37 may be provided depending on the number of hydraulic devices such as hydraulic clutch(es), hydraulic cylinder(s), and/or the like of the transmission 5.

The automatic operation controller 61 controls driving of the transmission 5 by electrically controlling the switching position and the opening of the control valve 37. The transmission 5 transmits the driving force from the prime mover 4 to the traveling device 7 to actuate the traveling device 7, causing the traveling vehicle body 3 to travel forward or rearward. For example, when the working device 2 is a ground implement or the like, the transmission 5 transmits the driving force from the prime mover 4 to the working device 2. This increases the force to actuate the working device 2.

The automatic operation controller 61 communicates with the working device 2 via the in-vehicle network N1. Specifically, the working device 2 includes a controller 2a and a communicator 2b. The automatic operation controller 61 sends a work command to the working device 2 via the in-vehicle network N1. Upon receipt of the work command by the communicator 2b, the controller 2a of the working device 2 controls the operation of element(s) of the working device 2 according to the work command to cause the working device 2 to perform an agricultural job (ground work). The controller 2a transmits, to the controller 60, information or data indicative of the manner in which a job is performed and/or the like via the communicator 2b over the in-vehicle network N1. The automatic operation controller 61 detects the manner in which a job is performed by the working device 2 and/or the like based on the information or data received from the working device 2 via the in-vehicle network N1.

The brake 6 is connected to control valve(s) 38. The control valve 38 is a solenoid valve actuated based on a control signal sent from the controller 60. The control valve 38 is supplied with hydraulic fluid delivered by the hydraulic pump 33. The automatic operation controller 61 actuates the brake 6 by electrically controlling the switching position and the opening of the control valve 38, thus braking the traveling vehicle body 3.

The steering unit 29 includes a steering wheel 30, a steering shaft (rotary shaft) 31, and an assist mechanism (power steering mechanism) 32. The steering wheel 30 is provided inside the cabin 9. The steering shaft 31 rotates as the steering wheel 30 rotates. The assist mechanism 32 assists in performing steering using the steering wheel 30.

The assist mechanism 32 includes a control valve 34 and a steering cylinder 35. The control valve 34 is a solenoid valve actuated based on a control signal sent from the controller 60. Specifically, the control valve 34 is a three-way switching valve which achieves multi-position switching by movement of a spool or the like. The control valve 34 is supplied with hydraulic fluid delivered by the hydraulic pump 33. The controller 60 adjusts the hydraulic pressure applied to the steering cylinder 35 by electrically controlling the switching position and the opening of the control valve 34, thus causing the steering cylinder 35 to extend or retract. The steering cylinder 35 is connected to knuckle arms (not illustrated) to change the orientation of the front wheels 7F.

The switching position and the opening of the control valve 34 can also be controlled by rotating the steering shaft 31. Specifically, when the steering wheel 30 is rotated, the steering shaft 31 rotates according to how the steering wheel 30 is rotated, and the switching position and the opening of the control valve 34 are changed. The steering cylinder 35 extends or retracts leftward or rightward with respect to the traveling vehicle body 3 according to the switching position and the opening of the control valve 34. The extending/retracting movement of the steering cylinder 35 changes the direction in which the front wheels 7F are steered. Note that the above-described steering unit 29 is an example, and is not limited to the above-described configuration.

The traveling vehicle body 3 of the agricultural machine 1 can be steered manually by manual operation of the steering wheel 30 and can be steered automatically by the automatic operation controller 61. The transmission 5 or the brake 6 is driven in response to the manual operation of an accelerator member (not illustrated) or a brake member (not illustrated) of the manual operator 62, thus causing the traveling vehicle body 3 to travel or stop. The traveling vehicle body 3 is also capable of traveling and stopping automatically in response to the control of the transmission 5 and the brake 6 by the automatic operation controller 61.

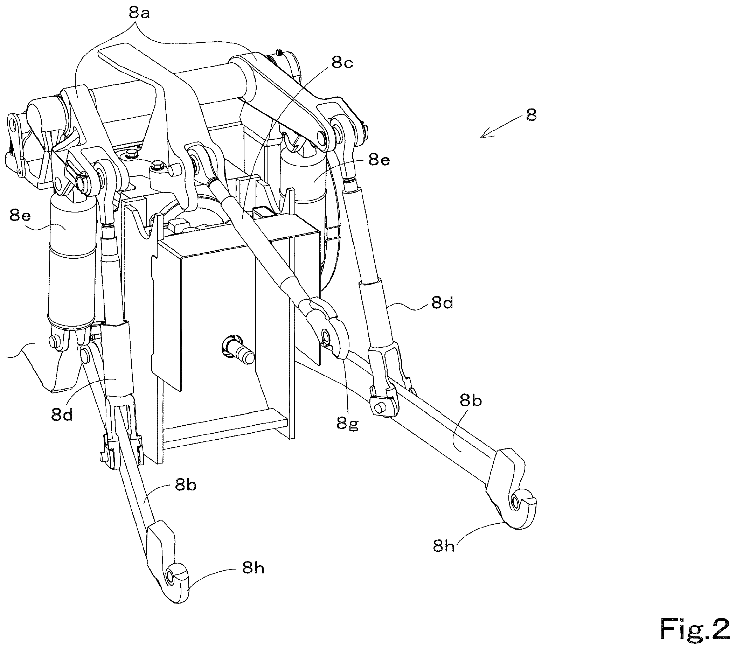

FIG. 2 is a perspective view of the lifting device 8. The lifting device 8 includes one or more lift arms 8a, one or more lower links 8b, at least one top link 8c, one or more lift rods 8d, and one or more lift cylinders 8e. The front ends of the lift arms 8a are supported on an upper rear portion of a case (transmission case) housing the transmission 5 such that the lift arms 8a are swingable up and down. The lift arms 8a are driven by the lift cylinders 8e to swing (raised or lowered). The lift cylinders 8e are hydraulic cylinders. The lift cylinders 8e are connected to control valve(s) 36 (FIG. 1). The control valve 36 is a solenoid valve actuated based on a control signal sent from the controller 60. The control valve 36 is supplied with hydraulic fluid delivered by the hydraulic pump 33.

The front ends of the lower links 8b as illustrated in FIG. 2 are supported on a lower rear portion of the transmission 5 (FIGS. 1 and 20) such that the lower links 8b are swingable up and down. The front end of the top link 8c is supported, at a position higher than the lower links 8b, on a rear portion of the transmission 5 such that the top link 8c is swingable up and down. The lift rods 8d connect the lift arms 8a and the lower links 8b. The rear ends of the lower links 8b and the top link 8c are provided with the connectors 8g and 8h to which the working device 2 can be connected.

The automatic operation controller 61 as illustrated in FIG. 1 adjusts hydraulic pressure applied to the lift cylinders 8e as illustrated in FIG. 2 by electrically controlling the switching position and the opening of the control valve 36, thus causing the lift cylinders 8e to extend or retract. The extension or retraction of the lift cylinders 8e raises or lowers the lift arms 8a and raises or lowers the lower links 8b connected to the lift arms 8a via the lift rods 8d. With this, the working device 2 swings up or down (raised or lowered) about front portions of the lower links 8b (the opposite ends of the lower links 8b from the connectors 8g and 8h).

The positioning device 40 as illustrated in FIG. 1 includes a receiver 41 and an inertial measurement unit (IMU) 42. The receiver 41 receives satellite signal(s) (position(s) of positioning satellite(s), time of transmission, correction information, and/or the like) sent from a satellite positioning system (positioning satellite(s)) such as D-GPS, GPS, GLONASS, BeiDou, Galileo, and/or Michibiki. The positioning device 40 detects the current position (for example, latitude and longitude) based on the satellite signal(s) received at the receiver 41. That is, the positioning device 40 is a position detector to detect the position of the traveling vehicle body 3 of the agricultural machine 1. The inertial measurement unit 42 includes an acceleration sensor, a gyroscope sensor, and/or the like. The inertial measurement unit 42 detects the roll angle, pitch angle, yaw angle, and/or the like of the traveling vehicle body 3.

The warner 63 includes a buzzer (beeper), a speaker, a warning lamp, and/or the like provided on the traveling vehicle body 3. The warner 63 provides a warning using sound and/or light to people in the vicinity of the traveling vehicle body 3. The detector 64 includes sensor(s) and/or the like (which may include camera(s)) provided at some position(s) on the agricultural machine 1 and/or the working device 2. The detector 64 detects the operating states (driven or stopped state, current position, and/or the like) of respective elements of the agricultural machine 1 such as the transmission 5, the brake 6, the traveling device 7, the lifting device 8, the steering unit 29, and/or the manual operator 62 based on signal(s) outputted from the sensor(s) and/or the like. The detector 64 also detects the operating state of the working device 2 based on signal(s) outputted from the sensor(s) and/or the like.

The agricultural assistance apparatus 50 includes, for example, a portable tablet terminal and/or the like. The agricultural assistance apparatus 50 is provided, for example, inside the cabin 9 of the agricultural machine 1, and is attachable to and detachable from the agricultural machine 1. That is, the agricultural machine 1 includes the agricultural assistance apparatus 50.

The agricultural assistance apparatus 50 includes a controller 51, a display operation interface 52, a memory 53, and a communicator 54. The controller 51 includes a CPU (or a microcomputer), one or more volatile memories, and one or more nonvolatile memories. The controller 51 controls elements of the agricultural assistance apparatus 50. The controller 51 includes an agricultural field registrar 51a, an area definer 51b, a route creator 51c, a status detector 51d, a recorder 51e, and a notifier 51g. Such elements are software programs in the present example, but may alternatively be, for example, hardware such as semiconductor device(s) and/or electric circuit(s) (e.g., application specific integrated circuit(s) (ASIC)).

The display operation interface 52 includes a touchscreen and displays various types of information on the screen. It is also possible to perform various input operations by performing predetermined actions on the display screen of the display operation interface 52. The display operation interface 52 functions as a display and an input. The agricultural assistance apparatus 50 may include an independent display and an independent operation interface (input) instead of the display operation interface 52.

The memory 53 includes nonvolatile memory(memories) and/or the like. The memory 53 is a read/write memory which stores information and/or data for assisting the travel and work of the agricultural machine 1. The communicator 54 includes an interface for connection with the in-vehicle network N1. The controller 51 communicates with the controller 60, the manual operator 62, the positioning device 40, the warner 63, the detector 64, and the working device 2 through the communicator 54 via the in-vehicle network N1. The communicator 54 is an output to output information and/or data to the controller 60 of the agricultural machine 1.

The agricultural field registrar 51a registers information relating to agricultural field(s) in which agricultural job(s) is/are to be performed by the agricultural machine 1 and working device(s) 2. The area definer 51b defines predetermined area(s) in the agricultural field registered by the agricultural field registrar 51a. The route creator 51c creates a travel route to be traveled by the agricultural machine 1 in the agricultural field registered by the agricultural field registrar 51a.

The status detector 51d detects the status of an agricultural job which has been performed by the working device 2 during travel of the agricultural machine 1 based on the travel route. Specifically, the status detector 51d detects the progress status of an agricultural job performed by the agricultural machine 1 and the working device 2, based on the position of the agricultural machine 1 detected by the positioning device 40 and the operating states of the agricultural machine 1 and the working device 2 detected by the detector 64. Alternatively, the status detector 51d receives, from the controller 60 and/or the controller 2a, log data representative of the results of control of elements by the controller 60 and/or by the controller 2a of the working device 2, and detects the progress status of the agricultural job performed by the agricultural machine 1 and the working device 2 based on the log data. The status detector 51d outputs the result of detection including the detected progress status of the agricultural job and the operating states of the agricultural machine 1 and the working device 2 detected by the detector 64.

The recorder 51e receives information inputted via the display operation interface 52, the result of detection by the status detector 51d, identification information of the working device 2, other information and/or data, and/or the like, and records them by causing the memory 53 to store them. The notifier 51g provides a notification by causing the display operation interface 52 to display the content of certain information and/or data. The notifier 51g may provide a notification by outputting, via a speaker of the warner 63, sound indicative of the content of certain information and/or data.

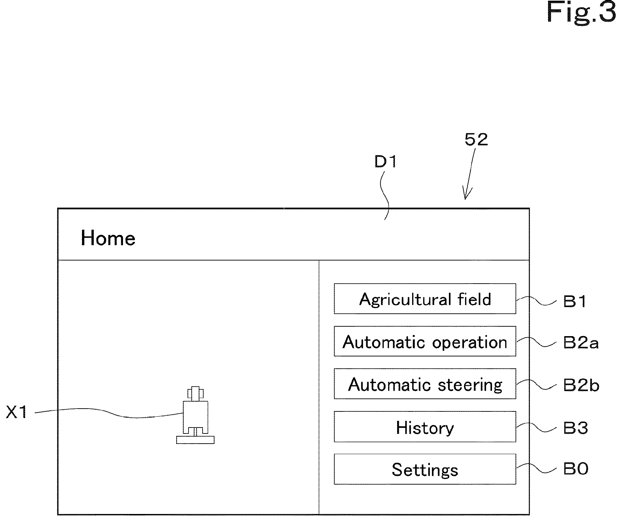

The following description discusses operation of elements of the agricultural assistance system 100. Upon startup of the agricultural assistance apparatus 50, the controller 51 causes the display operation interface 52 to display a home screen D1 as illustrated in FIG. 3. The data of the home screen D1 and data of screens described later are stored in the memory 53. The controller 51 reads the data of a screen from the memory 53 when needed, and causes the display operation interface 52 to display the screen based on the data.

The home screen D1 displays an agricultural machine symbol X1, an "agricultural field" key B1, an "automatic operation" key B2a, an "automatic steering" key B2b, a "history" key B3, and a "settings" key B0. The "settings" key B0 is used to make various settings. The "settings" key B0 is selected (tapped) to make settings and registration for certain items. Examples of the items include matters relating to the agricultural machine 1 provided with the agricultural assistance apparatus 50, a working device 2 linked to the agricultural machine 1, an agricultural job to be performed by the agricultural machine 1 and the working device 2, an agricultural field in which the agricultural job is to be performed, and the display operation interface 52.

The "history" key B3 is used to cause the history of j ob(s) performed by the agricultural machine 1 to be displayed. The "agricultural field" key B1 is used to register an agricultural field in which an agricultural job is performed by the agricultural machine 1. The "automatic operation" key B2a is used to make settings and estimation regarding an automatic traveling-and-working mode of the agricultural machine 1. The "automatic steering" key B2b is used to make settings and estimation regarding an automatic steering-and-working mode of the agricultural machine 1.

The automatic traveling-and-working mode is a mode in which the traveling vehicle body 3 of the agricultural machine 1 is caused to travel in automatic operation while the working device 2 is caused to perform an agricultural job (ground work). The automatic operation of the agricultural machine 1 indicates that the travel speed of the traveling vehicle body 3 is changed automatically and the traveling vehicle body 3 is steered automatically. The automatic steering-and-working mode is a mode in which the traveling vehicle body 3 is steered automatically while the working device 2 is caused to perform an agricultural job (ground work). When the agricultural machine 1 is in the automatic steering-and-working mode, the operator of the agricultural machine 1 operates the accelerator member or the brake member of the manual operator 62 (FIG. 1), so that the travel speed of the traveling vehicle body 3 is changed in response to the operation of the accelerator member or the brake member. That is, in the automatic steering-and-working mode, the travel speed of the traveling vehicle body 3 is changed based on manual operation.

It is also possible to cause the agricultural machine 1 to travel by manual operation, and possible, during the travel, to cause the working device 2 to do ground work. The manual operation of the agricultural machine 1 indicates that the operator operates the accelerator member or the brake member of the manual operator 62 to change the travel speed of the traveling vehicle body 3, and moves the steering wheel 30 (FIG. 1) to steer the traveling vehicle body 3.

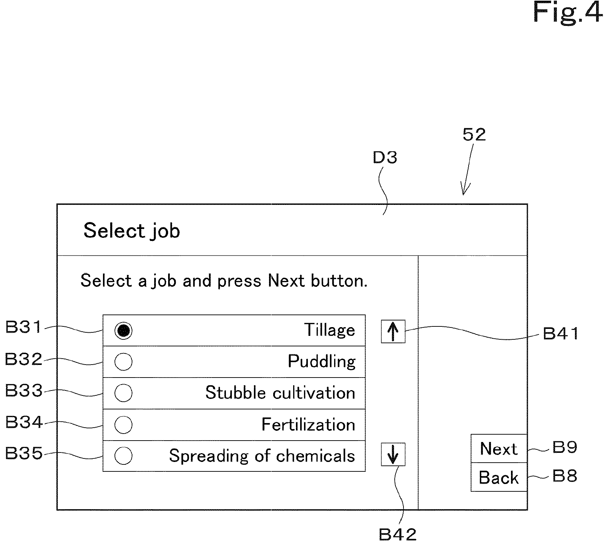

Upon selection of the "agricultural field" key B1 by the user on the home screen D1 in FIG. 3, the display operation interface 52 displays an agricultural field registration screen (not illustrated). The user performs predetermined action(s) on the agricultural field registration screen to input agricultural field information such as the position, outline, identification information, and/or the like of an agricultural field. The controller 51 registers the agricultural field information inputted via the agricultural field registration screen by causing the memory 53 to store the agricultural field information in a predetermined area thereof. After the registration of the agricultural field information, upon selection of the "automatic operation" key B2a by the user on the home screen D1, the controller 51 causes the display operation interface 52 to display a "select job" screen D3 as illustrated in FIG. 4.

The "select job" screen D3 displays a message indicative of instructions for input operations. The "select job" screen D3 also displays job keys B31 to B35, an up-pointing arrow key B41, a down-pointing arrow key B42, a "next" key B9, and a "back" key B8. The job keys B31 to B35 indicate agricultural jobs that can be performed by the agricultural machine 1 and working device(s) 2 linked to the agricultural machine 1. In FIG. 4, five job keys B31, B32, B33, B34, and B35 are displayed. If the number of the agricultural jobs that can be performed by the agricultural machine 1 and the working device(s) 2 is six or more, the controller 51 causes job key(s) indicating another type(s) of job(s) to be displayed on the "select job" screen D3 upon selection of the up-pointing arrow key B41 or the down-pointing arrow key B42 by the user.

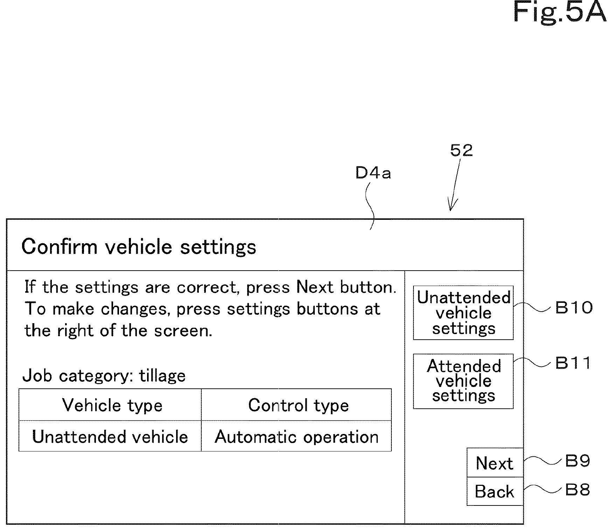

Upon selection of any one of the job keys B31 to B35 by the user, the controller 51 causes the selected job key to be displayed on the "select job" screen D3 in a manner that differs from the other job keys. In the example in FIG. 4, only the selected job key ("tillage" key B31) is assigned a filled circle. Upon selection of the "next" key B9 by the user when any one of the job keys B31, B32, B33, and B34 is in the selected state, the controller 51 causes the display operation interface 52 to display a "confirm vehicle settings" screen D4a as illustrated in FIG. 5A. That is, the "next" key B9 is used to move from the current screen to the next screen on the display operation interface 52. Note that, upon selection of the "back" key B8 by the user, the controller 51 causes the display operation interface 52 to display the home screen D1 as illustrated in FIG. 3. That is, the "back" key B8 is used to go back from the current screen to the previous screen on the display operation interface 52.

The "confirm vehicle settings" screen D4a as illustrated in FIG. 5A displays a message indicating instructions for input operations, the category of the agricultural job, the type of agricultural machine 1, an "unattended vehicle settings" key B10, an "attended vehicle settings" key B11, a "next" key B9, and a "back" key B8. The agricultural job selected on the "select job" screen D3 is displayed in the "job category" portion. The type of agricultural machine 1 includes vehicle type and control type. In FIG. 5A, the preregistered (preset) type of agricultural machine 1 is displayed on the "confirm vehicle settings" screen D4a.

Note that the user can input the type of agricultural machine 1 by, for example, selecting the "settings" key B0 on the home screen D1 (FIG. 3) and performing predetermined input operation(s) on the display operation interface 52. In so doing, the user can also input the specifications such as the name and/or the size of the agricultural machine 1 by performing predetermined input operation(s). Upon the user's further predetermined input operation(s), the controller 51 registers the inputted type and specifications of the agricultural machine 1 by causing the memory 53 to store them in a predetermined area thereof. It is also possible to input information about the agricultural machine 1 (described later) and information about the working device 2 (described later) and register (store) them in the memory 53 in the same manner starting from the home screen D1.

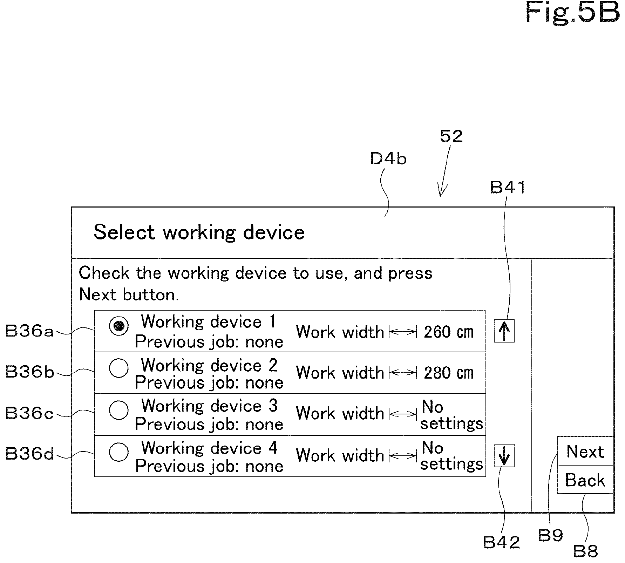

The user can change the type of agricultural machine 1 by selecting the "unattended vehicle settings" key B10 or the "attended vehicle settings" key B11 on the "confirm vehicle settings" screen D4a and performing predetermined input operation(s). Upon selection of the "next" key B8 on the "confirm vehicle settings" screen D4a by the user, the controller 51 causes an internal memory to store settings information (the category of agricultural job and the type of agricultural machine 1) displayed on the "confirm vehicle settings" screen D4a, and causes the display operation interface 52 to display a "select working device" screen D4b as illustrated in FIG. 5B.

The "select working device" screen D4b displays a message indicating instructions for input operations, working device keys B36a to B36d, an up-pointing arrow key B41, a down-pointing arrow key B42, a "next" key B9, and a "back" key B8. The working device keys B36a to B36d indicate preregistered representative information specific to respective working devices 2. The representative information specific to a working device 2 includes the name of the working device 2, the presence or absence of previous job(s) performed by the working device 2, and work width. The work width refers to the dimension of the workable portion of the working device 2 perpendicular to the direction of travel in a horizontal plane. In FIG. 5B, four working device keys B36a to B36d are displayed. If the number of working devices 2 registered in the agricultural assistance apparatus 50 is five or more, the controller 51 causes working device key(s) indicating another working device(s) 2 to be displayed on the "select working device" screen D4b upon selection of the up-pointing arrow key B41 or the down-pointing arrow key B42 by the user.

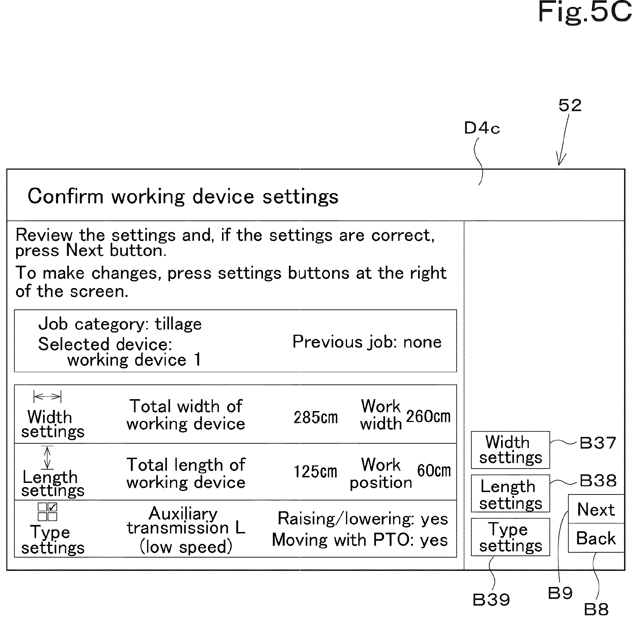

Upon selection of any one of the working device keys B36a to B36d by the user, the controller 51 causes the selected working device key to be displayed on the "select working device" screen D4b in a manner that differs from the other working device keys. In the example in FIG. 5B, only the selected working device key (working device key B36a) is assigned a filled circle. Upon selection of the "next" key B9 by the user when any one of the working device keys B36a to B36d is in the selected state, the controller 51 causes the display operation interface 52 to display a "confirm working device settings" screen D4c as illustrated in FIG. 5C.

The "confirm working device settings" screen D4c displays a message indicating instructions for input operations, information specific to the working device 2 selected on the "select working device" screen D4b (FIG. 5B), settings keys B37 to B39, a "next" key B9, and a "back" key B8. The information specific to the working device 2 includes the name of the working device 2, the presence or absence of previous job(s) performed by the working device 2, size information of the working device 2, and the type of the working device 2. That is, the "confirm working device settings" screen D4c displays detailed specifications of the working device 2 selected on the "select working device" screen D4b. In FIGS. 5B and 5C, preregistered information specific to the working device 2 is displayed on the screens D4b and D4c.

As illustrated in FIG. 5C, the size information of the working device 2 includes the total width, work width, total length, and work position of the working device 2. The type of the working device 2 includes the speed stage of an auxiliary transmission (not illustrated) to drive the working device 2 (tiller) to rotate, whether or not the working device 2 is to be raised and lowered by the lifting device 8, and whether or not the working device 2 is to move together with a power take-off (PTO) of the agricultural machine 1.

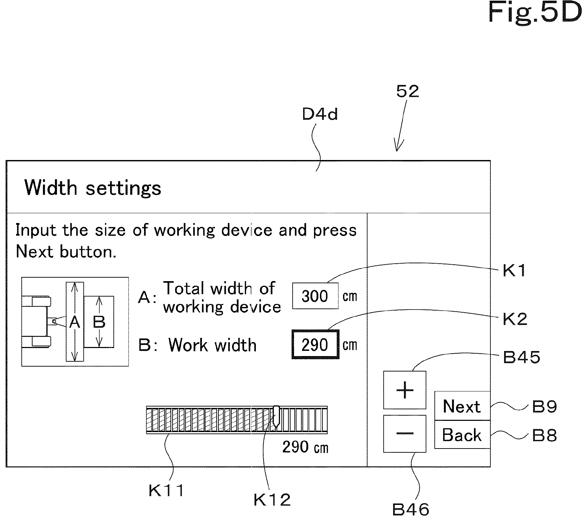

The settings keys B37 to B39 are each used to set and change the size information or the type of the working device 2. Specifically, upon selection of the "width settings" key B37 by the user, the controller 51 causes the display operation interface 52 to display a "width settings" screen D4d as illustrated in FIG. 5D. It is possible to change the set values of the total width (the width indicated by "A" on the screen D4d) and the work width (the width indicated by "B" on the screen D4d) of the working device 2 on the "width settings" screen D4d. The user can input a different value of the total width or the work width into an input field K1 for the total width or an input field K2 for the work width, by selecting the input field K1 or the input field K2 and then operating (taping) a plus sign key B45 or a minus sign key B46 to move a cursor K12 on a scale K11 leftward or rightward. Although the work width (B) of the working device 2 is narrower than the total width (A) of the working device 2 in FIG. 5D, the work width (B) may be wider than the total width (A) depending on the type of working device 2.

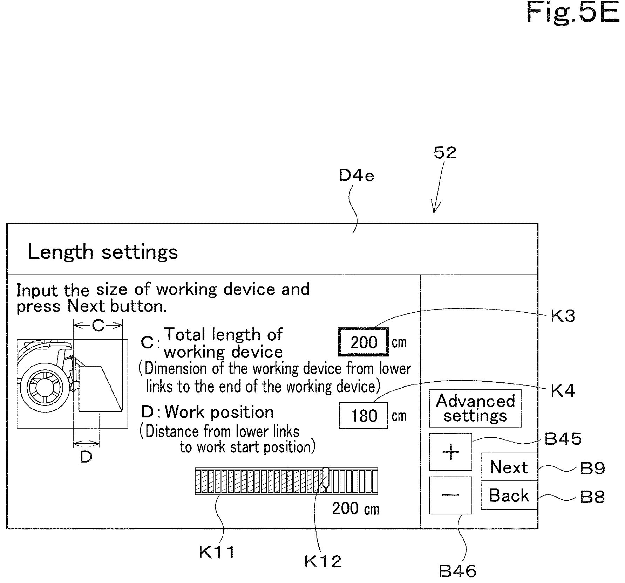

Upon selection of the "length settings" key B38 by the user, the controller 51 causes the display operation interface 52 to display a "length settings" screen D4e as illustrated in FIG. 5E. It is possible to change the set values of the total length and the work position of the working device 2 on the "length settings" screen D4e. The total length is the dimension of the working device 2 from the portion of the working device 2 at which the working device 2 is linked to the lower links 8b (FIGS. 1 and 2) of the lifting device 8 to the rear edge of the working device 2 (the length indicated by "C" on the screen D4e). The work position is the distance from the portion of the working device 2 at which the working device 2 is linked to the lower links 8b to the front edge of the portion of the working device 2 that does ground work (the dimension indicated by "D" on the screen D4e). The user can input a different value of the total length (C) or the work position (D) into an input field K3 for the total length (C) or an input field K4 for the work position (D), by selecting the input field K3 or the input field K4 and then operating a plus sign key B45 or a minus sign key B46 to move a cursor K12 leftward or rightward.

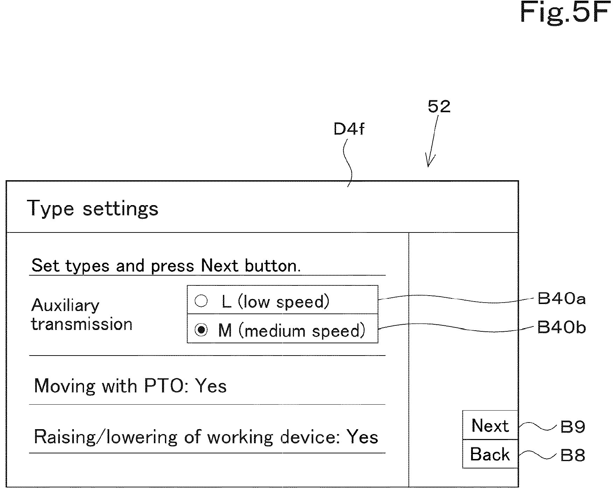

Upon selection of the "type settings" key B39 by the user, the controller 51 causes the display operation interface 52 to display a "type settings" screen D4f as illustrated in FIG. 5F. It is possible to change the set type of the working device 2 on the "type settings" screen D4f. Specifically, the user can input "low speed stage" as the speed stage of the auxiliary transmission by selecting an L (low speed) key B40a, and can input the "medium speed stage" as the speed stage of the auxiliary transmission by selecting an M (medium speed) key B40b. The movement of the working device 2 together with the PTO of the agricultural machine 1 and the raising/lowering of the working device 2 by the lifting device 8 are both fixed to "yes", and cannot be changed on the "type settings" screen D4f. For another example, the "type settings" screen D4f may include keys to select "yes" or "no" for the movement of the working device 2 together with the PTO of the agricultural machine 1 and the raising/lowering of the working device 2 by the lifting device 8.

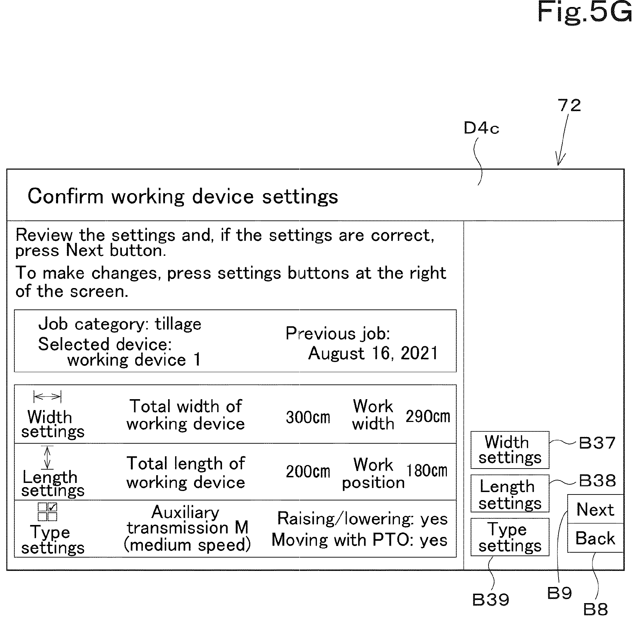

After input of the different value(s) of the size information or different type of the working device 2 by the user as described above on the settings screen(s) D4d, D4e, and/or D4f, upon selection of the "next" key B9 on the settings screen D4d, D4e, or D4f by the user, the controller 51 causes the display operation interface 52 to display the "confirm working device settings" screen D4c in which the size information and/or the type changed on the settings screen(s) D4d, D4e, and/or D4f is/are reflected, as illustrated in, for example, FIG. 5G. The total width, the work width, the total length, and the work position of the working device 2 on the updated "confirm working device settings" screen D4c as illustrated in FIG. 5G are larger than those on the previous "confirm working device settings" screen D4c as illustrated in FIG. 5C, and the speed stage of the auxiliary transmission has been changed to "medium speed stage".

Note that, upon selection of the "back" key B8 by the user on the settings screen D4d, D4e, or D4f, the recorder 51e discards the change(s) made to the size information and/or the type of the working device 2 on the settings screen D4d, D4e, or D4f, and causes the display operation interface 52 to display the "confirm working device settings" screen D4c as illustrated in FIG. 5C to which no changes have been made. In such a case, the size information or the type of the working device 2 is not changed.

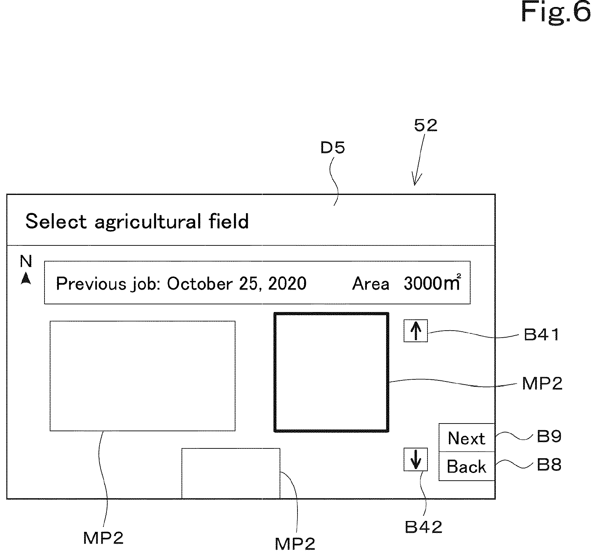

Upon selection of the "next" key B9 by the user on the "confirm working device settings" screen D4c, the controller 51 causes the internal memory to store the settings information (the name, size information, and type of the working device 2, and the presence/absence of previous job(s) performed by the working device 2) displayed on the "confirm working device settings" screen D4c, and causes the display operation interface 52 to display a "select agricultural field" screen D5 as illustrated in FIG. 6.

The "select agricultural field" screen D5 displays one or more registered agricultural field maps MP2, an up-pointing arrow key B41, a down-pointing arrow key B42, a "next" key B9, and a "back" key B8. The number of the registered agricultural field maps MP2 displayed in FIG. 6 is three. If the number of the registered agricultural field maps MP2 is four or more, the controller 51 causes another agricultural field map(s) MP2 to be displayed on the "select agricultural field" screen D5 upon selection of the up-pointing arrow key B41 or the down-pointing arrow key B42 by the user.

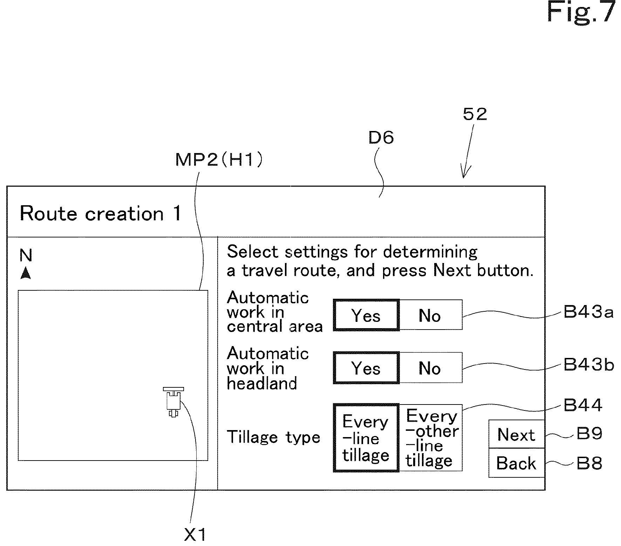

Upon selection of any of the agricultural field maps MP2 by the user, the controller 51 causes the selected agricultural field map MP2 to be displayed in a manner differing from the other agricultural field maps MP2. The selected agricultural field map MP2 only is enclosed by a bold line in FIG. 6. The controller 51 causes the date/time of the previous agricultural job performed in the agricultural filed shown in the selected agricultural field map MP2 and the area of the agricultural filed shown in the selected agricultural field map MP2 to be displayed on the "select agricultural field" screen D5. Upon selection of the "next" key B9 by the user when any of the agricultural field maps MP2 is in the selected state, the controller 51 causes the internal memory to store information of the selected agricultural field map MP2, and causes the display operation interface 52 to display a "route creation 1" screen D6 as illustrated in FIG. 7. Note that the information of the agricultural field map MP2 includes the identification information, outline, and the area of the selected agricultural field map MP2, the date/time of the previous job, and the identification information, position, and outline of the agricultural field corresponding to the agricultural field map MP2, and/or the like.

The "route creation 1" screen D6 as illustrated in FIG. 7 displays the selected agricultural field map MP2 (outline H1 of the corresponding agricultural field), an agricultural machine symbol X1, a message indicating instructions for input operations, job keys B43a, B43b, and B44, a "next" key B9, and a "back" key B8. The job keys B43a, B43b, and B44 are used to make settings for creation of a travel route for the agricultural machine 1. In other words, the job keys B43a, B43b, and B44 are used to make job settings for the agricultural job to be performed by the agricultural machine 1 (traveling vehicle body 3) and the working device 2 on the agricultural field.

More specifically, the "automatic work in central area" key B43a is used to select whether or not to perform the agricultural job with the working device 2 while causing the traveling vehicle body 3 of the agricultural machine 1 to travel in automatic operation in the central area defined in the agricultural field map MP2 (described later). The "automatic work in headland" key B43b is used to select whether or not to perform the agricultural job with the working device 2 while causing the traveling vehicle body 3 of the agricultural machine 1 to travel in automatic operation in the headland(s) defined in the agricultural field map MP2 (described later).

The job type key B44 is used to select the manner in which the job is performed by the working device 2. The present embodiment assumes that tillage is selected on the "select job" screen D3 in FIG. 4 for example, and therefore the job type key B44 in FIG. 7 is a key used to select whether the type of the tillage is every-line tillage or every-other-line tillage. If some other job is selected on the "select job" screen D3 in FIG. 4, the job type key B44 in FIG. 7 is a key used to select the manner in which the other job is performed.

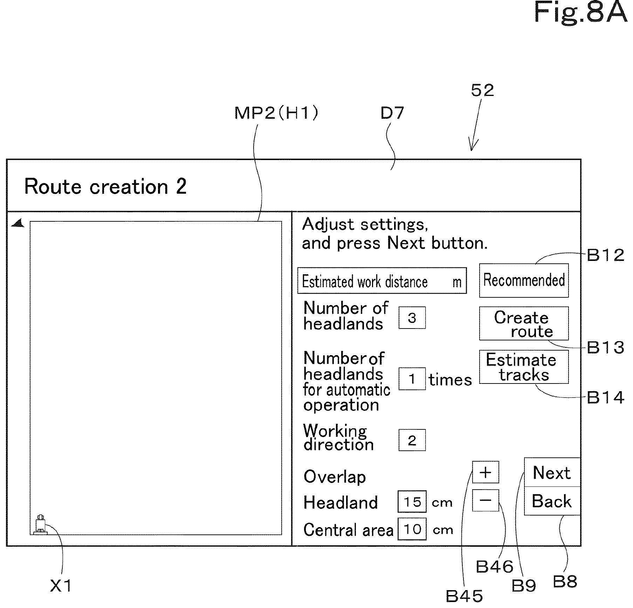

In FIG. 7, "agricultural job is performed by the working device 2 while the agricultural machine 1 travels in automatic operation in the central area of the agricultural field" is selected using the "automatic work in central area" key B43a, "agricultural job is performed by the working device 2 while the agricultural machine 1 travels in automatic operation in the headland(s) of the agricultural field" is selected using the "automatic work in headland" key B43b, and every-line tillage is selected as the type of tillage using the job type key B44. Upon selection of the "next" key B9 by the user, the controller 51 causes the internal memory to store job settings (settings made using the job keys B43a, B43b, and B44) displayed on the "route creation 1" screen D6, and causes the display operation interface 52 to display a "route creation 2" screen D7 as illustrated in FIG. 8A.

The "route creation 2" screen D7 displays the selected agricultural field map MP2, an agricultural machine symbol X1, a message indicating instructions for input operations, setting items and their corresponding value input fields, a "recommended" key B12, a "create route" key B13, an "estimate tracks" key B14, a plus sign key B45, a minus sign key B46, a "next" key B9, and a "back" key B8. While the "route creation 2" screen D7 is displayed, the controller 51 may cause the communicator 54 to acquire the actual position of the traveling vehicle body 3 detected by the positioning device 40 and cause the agricultural machine symbol X1 to be displayed at the point on the agricultural field map MP2 that corresponds to the actual position of the traveling vehicle body 3.

The setting items on the "route creation 2" screen D7 indicate settings for use in creating a travel route and also job settings for use in performing the agricultural job with the agricultural machine 1 and the working device 2 on the agricultural field. The setting items include estimated work distance, the number of headlands, the number of headlands for automatic operation, working direction, overlap-on-headland, and overlap-in-central-portion. It is possible to input values of the items except for the estimated work distance. The number of headlands indicates the number of headland(s) extending inside and along the outline H1 of the registered agricultural field (agricultural field map MP2). The number of headlands for automatic operation indicates in how many of the above defined headlands the agricultural job is performed by the working device 2 while the agricultural machine 1 travels in automatic operation (how many times the agricultural machine 1 runs around the central area C1 in automatic operation).

The working direction refers to the direction in which the working device 2 is caused to perform the job while the traveling vehicle body 3 is caused to travel straight back and forth in the central portion located inward of the headland(s) of the agricultural field. Upon input of a predetermined value (such as "1" or "4") into the value input field for the working direction, the upward, downward, leftward, or rightward direction corresponding to that value is set on the "route creation 2" screen D7. The overlap-on-headland indicates an overlap of the work width of the working device 2 with a headland. The overlap-in-central-portion indicates an overlap between work widths when the job is performed by the working device 2 while the traveling vehicle body 3 is caused to travel straight back and forth in the central portion of the agricultural field.

On the "route creation 2" screen D7, the user can, by selecting any of the value input fields for the setting items and operating the plus sign key B45 or the minus sign key B46, input a value in the selected value input field. Furthermore, upon selection of the "recommended" key B12 by the user, the controller 51 reads recommended values for the respective setting items corresponding to the agricultural job selected on the "select job" screen D3 (FIG. 4) from recommended values pre-stored in the memory 53, and inputs (displays) the read recommended values into the value input fields.

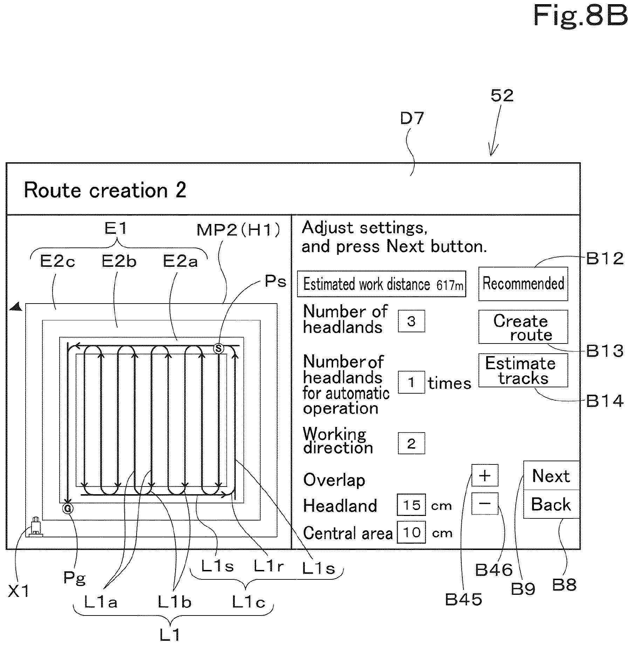

After the input of the values of the setting items on the "route creation 2" screen D7 by the user, upon selection of the "create route" key B13 by the user, the controller 51 causes the internal memory to store the values of the setting items. The area definer 51b (FIG. 1) defines a central area (second area) C1 and a headland area (first area) E1 on the agricultural field map MP2 as illustrated in FIG. 8B. The route creator 51c (FIG. 1) creates a travel route (planned travel route) L1 on the agricultural field map MP2.

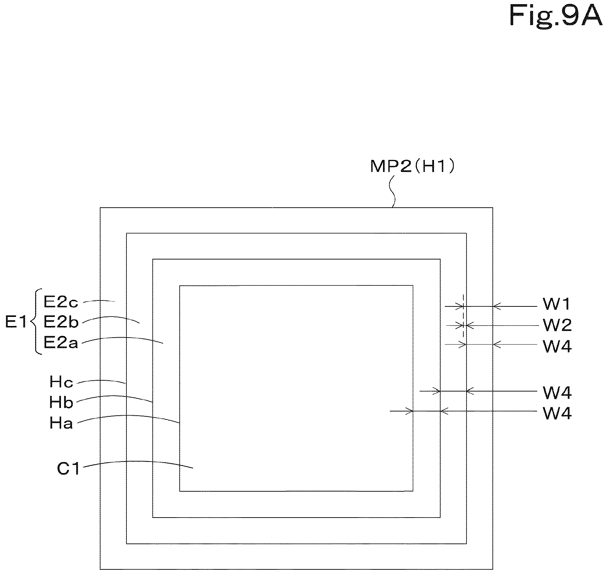

FIGS. 9A to 9D illustrate how the areas C1 and E1 and the travel route L1 are set. Upon selection of the "create route" key B13 by the user, the area definer 51b first defines the central area C1 and the headland area E1 based on the outline H1 of the agricultural field, the work width of the working device 2, and the number of headlands and/or the overlap-on-headland inputted on the "route creation 2" screen D7. Specifically, for example, the area definer 51b calculates outlines Hc, Hb, and Ha by displacing the outline H1 of the agricultural field inward by a width W4 (which is obtained by subtracting the overlap-on-headland W2 from the work width W1 of the working device 2) one or more times corresponding to the number of headlands, as illustrated in FIG. 9A. Then, the area definer 51b defines, as the central area C1, an area (central portion) enclosed by the outline Ha which is the innermost outline.

For another example, the area definer 51b may calculate the outlines(s) by displacing the outline H1 of the agricultural field inward by the work width of the working device 2 (or the total width of the working device 2) one or more times corresponding to the number of headlands, and set, as the central area, an area (central portion) enclosed by the innermost outline.

After defining the central area C1 as described above, the area definer 51b defines, as the headland area E1, an area in the form of a frame (such an area is "outer frame portion") located outward of the central area C1 and inward of the outline H1 of the agricultural field. Then, the area definer 51b causes the memory 53 to store data of the positions indicating the areas C1 and E1 and/or the like.

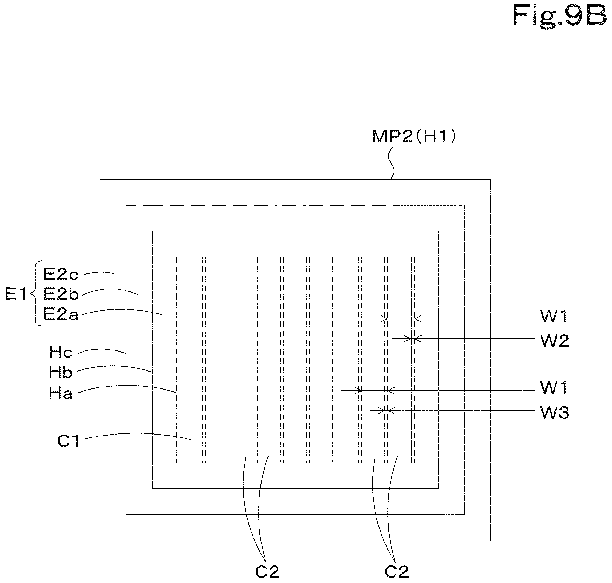

The route creator 51c creates the travel route L1 based on the defined areas C1 and E1, the work width of the working device 2, the inputted working direction, the inputted overlap-on-headland, and the inputted overlap-in-central-portion. Specifically, as illustrated in FIG. 9B, the route creator 51c first creates unit work sections C2 in the central area C1 one after another from one of the opposite edges (the right edge in FIG. 9B) of the central area C1 each extending parallel to the working direction (up-and-down direction in FIG. 9B) such that the unit work sections C2 each have a width equal to the work width W1 of the working device 2. In so doing, the unit work section C2 created first by the route creator 51c has its width (which equals to the work width W1) overlapped with the headland area E1 by the overlap-on-headland W2. The second and subsequent unit work sections C2 created by the route creator 51c have their width (which equals to the work width W1) overlapped with the previously created unit work section C2 by the overlap-in-central-portion W3.

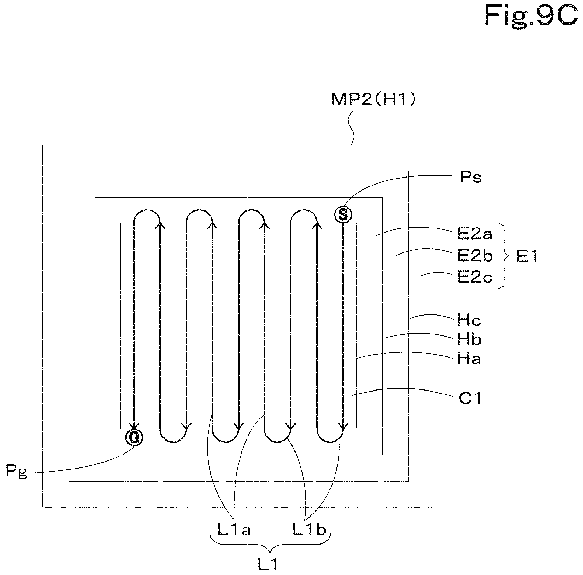

Next, as illustrated in FIG. 9C, the route creator 51c creates straight route portions L1a which correspond to the respective unit work sections C2 and on which the traveling vehicle body 3 travels straight. In so doing, the route creator 51c creates a straight route portion L1a in the form of a straight line connecting the opposite ends of a corresponding unit work section C2 in the longitudinal direction thereof, along the widthwise (sideways direction in FIG. 9C) centerline of the unit work section C2. Note that with regard to the last created unit work section C2 (the leftmost unit work section C2 in the central area C1 in FIG. 9B), if the straight route portion L1a created for that unit work section C2 is outside the central area C1, the route creator 51c may exclude that straight route portion L1a from the travel route L1.

Next, the route creator 51c creates route portions L1b each connecting adjacent ones of the straight route portions L1a in the headland area E1. Each of the route portions L1b is a turn route portion on which the traveling vehicle body 3 turns to travel from one of the two adjacent straight route portions L1a to the other.

Note that the turn route portions L1b in the form of a simple semicircle are shown as an example in FIG. 9C for convenience of description, such as for ease of displaying the turn route portions L1b on the display screen of the display operation interface 52 and for easy visual recognition of the travel route L1 on the display screen. When the traveling vehicle body 3 actually travels along one of adjacent straight route portions L1a and then turns toward the other of the adjacent straight route portions L1a, the traveling vehicle body 3 makes a turn by traveling forward and rearward, and therefore the actual travel path is more complex than the turn route portion L1b. That is, the turn route portions L1b are for display on the display operation interface 52, and there may be cases in which the agricultural machine 1 does not turn along the turn route portions L1b. The route creator 51c may create the turn route portions L1b in the form different from a semicircle. The same applies to turn route portions L1r (described later).

The controller 60 (FIG. 1) of the agricultural machine 1 causes the lifting device 8 (FIG. 2) to lower the working device 2 to cause the working device 2 to do ground work while causing the traveling vehicle body 3 to travel based on the straight route portions L1a. The automatic operation controller 61 causes the lifting device 8 to raise the working device 2 to stop the working device 2 from doing the ground work when causing the traveling vehicle body 3 to turn in an area corresponding to each of the turn route portions L1b, i.e., when causing the traveling vehicle body 3 to turn from one of adjacent straight route portions L1a toward the other.

That is, the straight route portions L1a are work route portions on which ground work is done by the working device 2 while the traveling vehicle body 3 of the agricultural machine 1 is caused to travel in automatic operation. The central area C1 in which the straight route portions L1a are created is a work area in which ground work is done by the working device 2 while the traveling vehicle body 3 is caused to travel straight back and forth in automatic operation. Note that the work route portions are not limited to those in the form of a straight line such as the straight route portions L1a, and may be curved route portions. It is only necessary that one or more work route portions in the form of a straight line and/or one or more work route portions in the form of a curve be created in the work area.

For example, assume that doing work in the central area C1 is selected via the "automatic work in central area" key B43a, doing no work in headland(s) is selected via the "automatic work in headland" key B43b, and every-line tillage is selected via the job type key B44 on the "route creation 1" screen D6 in FIG. 7. In such a case, as illustrated in FIG. 9C, the route creator 51c creates the travel route L1 including the straight route portions L1a and the turn route portions L1b. The route creator 51c sets a starting point Ps at the end of one endmost strait route portion L1a that is not connected to any turn route portions L1b (at the upper end of the rightmost straight route portion L1a in FIG. 9C) in the central area C1, and sets a goal point Pg at the end of the opposite endmost strait route portion L1a (at the lower end of the leftmost straight route portion L1a in FIG. 9C).

Upon completion of the creation of the travel route L1 as described above, the controller 51 causes the areas C1 and E1, the travel route L1, the starting point Ps, and the goal point Pg to be displayed on the "route creation 2" screen D7, and causes the internal memory to store them as route information. The route creator 51c calculates the estimated work distance over which ground work is done by the working device 2 while the traveling vehicle body 3 is caused to travel based on all the straight route portions L1a. Then, the controller 51 causes the estimated work distance to be displayed on the "route creation 2" screen D7.

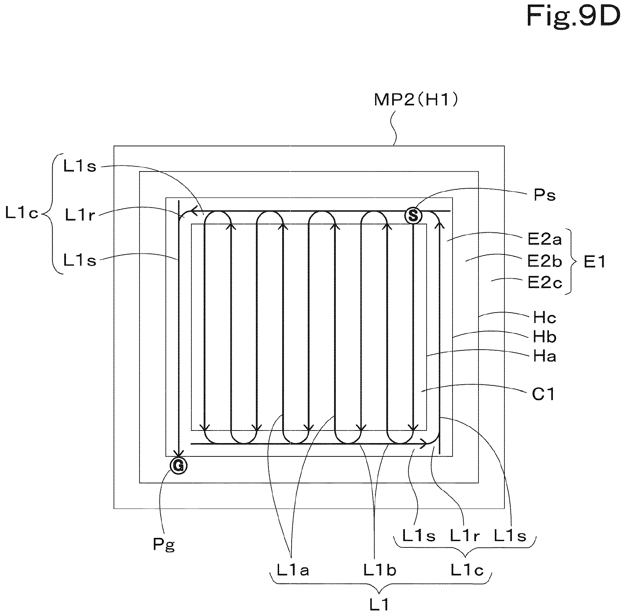

Assume that doing work in the central area C1 is selected via the "automatic work in central area" key B43a, doing work in headland(s) is selected via the "automatic work in headland" key B43b, and every-line tillage is selected via the job type key B44 on the "route creation 1" screen D6 in FIG. 7. In such a case, the route creator 51c creates, in the headland area E1, a go-around route portion L1c which extends around the central area C1 in addition to the straight route portions L1a and the turn route portions L1b, as illustrated in FIG. 9D. In so doing, for example, the route creator 51c creates the go-around route portion L1c in the headland E2a that is nearest the central area C1 of the one or more headlands E2a, E2b, and/or E2c defined outside the central area C1 by the area definer 51b.

The route creator 51c sets a starting point Ps at the end not connected to any turn route portion L1b (the upper end of the rightmost straight route portion L1a in FIG. 9D) of one of endmost straight route portions L1a (the leftmost and rightmost straight route portions L1a in FIG. 9D) in the central area C1, and connects the go-around route portion L1c to the end of the other of the endmost straight route portions L1a (to the lower end of the leftmost straight route portion L1a in FIG. 9D). The route creator 51c sets a goal point Pg at the end of the go-around route portion L1c that is not connected to any straight route portion L1a.

The go-around route portion L1c is a work route portion on which ground work is done by the working device 2 while the traveling vehicle body 3 is caused to travel in automatic operation. The go-around route portion L1c includes straight route portions L1s which are substantially straight and turn route portions L1r in the form of a curve with a curvature equal to or greater than a predetermined value. Each of the straight route portions L1s is created on the widthwise centerline of the headland E2a. One of adjacent straight route portions L1s in the direction of travel on the go-around route portion (travel route) L1c and the other of the adjacent straight route portions L1s extend in different directions (differ in direction of travel). Each of the turn route portions L1r is a route connecting such adjacent straight route portions L1s and on which the traveling vehicle body 3 turns from one of the adjacent straight route portions L1s toward the other.

The turn route portions L1r in the form of a simple arc are shown as an example in FIG. 9D for convenience of description. However, when the agricultural machine 1 or the like actually turns from one of adjacent straight route portions L1s toward the other, the agricultural machine 1 or the like may make a multi-point turn or travel rearward in addition to traveling forward, forming a path of a more complex shape than the arc. That is, the turn route portions L1r are for display on the display operation interface 52, and there may be cases in which the agricultural machine 1 does not turn along the turn route portions L1r. The route creator 51c may create the turn route portions L1r in the form different from an arc.

The go-around route portion L1c may also include slightly curved portion(s) with a curvature less than the predetermined value (curved route portion(s), not illustrated) in addition to the straight route portions L1s and the turn route portions L1r, depending on the shape of the outline H1 of the agricultural field (for example, when the outline H1 of the agricultural field has an irregular shape). In such a case, the automatic operation controller 61 may cause the working device 2 to do ground work while the traveling vehicle body 3 is traveling in automatic operation based on the straight route portions L1s and the slightly curved portion(s) of the go-around route portion L1c. That is, the straight route portions L1s and the slightly curved portion(s) are work route portions.

The automatic operation controller 61 causes the lifting device 8 to raise the working device 2 to stop the working device 2 from doing the ground work when causing the traveling vehicle body 3 to turn in an area corresponding to each of the turn route portions L1r, i.e., when causing the traveling vehicle body 3 to turn from one of adjacent straight route portions L1s toward the other. The automatic operation controller 61 causes the lifting device 8 to raise the working device 2 to stop the working device 2 from doing the ground work also when causing the traveling vehicle body 3 to turn from one of the endmost straight route portions L1a in the central area C1 toward one of the endmost straight route portions L1s in the headland area E1.

The headland E2a in which the go-around route portion L1c is created as described above is a work area in which ground work is done by the working device 2 while the traveling vehicle body 3 travels around the central area C1. For another example, the route creator 51c may create go-around route portions also in the other headlands E2b and E2c located outward of the headland E2a. The "route creation 2" screen D7 may include a key used to input the number of headlands in which a go-round route portion is to be created.

The route creator 51c may create a go-around route portion that goes through at least one of the headlands E2a, E2b, and E2c two or more times. The route creator 51c may create a go-around route portion that goes through each of adjacent headlands. That is, the route creator 51c may create, in the headland area E1, a go-around route portion that goes around the central area C1 one or more times equal to or more than the number of headlands.

As described above, the route creator 51c creates a travel route L1 including straight route portions L1a, turn route portions L1b, and/or go-around route portion(s) L1c, and then sets a starting point Ps and a goal point Pg on the travel route L1. Then, as illustrated in FIG. 8B, the controller 51 causes route information such as the areas C1 and E1, the travel route L1, the starting point Ps, and the goal point Pg to be displayed on the "route creation 2" screen D7. The route creator 51c also calculates an estimated work distance over which ground work is done by the working device 2 while the traveling vehicle body 3 is caused to travel based on all the straight route portions L1a and L1s. Then, the controller 51 causes the estimated work distance to be displayed on the "route creation 2" screen D7.

After the travel route L1 and the like are displayed on the "route creation 2" screen D7, the user selects the "estimate tracks" key B14. Upon the selection by the user, the controller 51 calculates a work portion in which ground work is to be done by the working device 2 while the traveling vehicle body 3 is caused to travel in automatic operation based on the travel route L1, i.e., calculates estimated work track(s) of the working device 2. The controller 51 then causes the estimated work track(s) to be displayed on the travel route L1 of the agricultural field map MP2 on the "route creation 2" screen D7 such that the estimated work track(s) is/are superimposed on the travel route L1 (this is not illustrated).

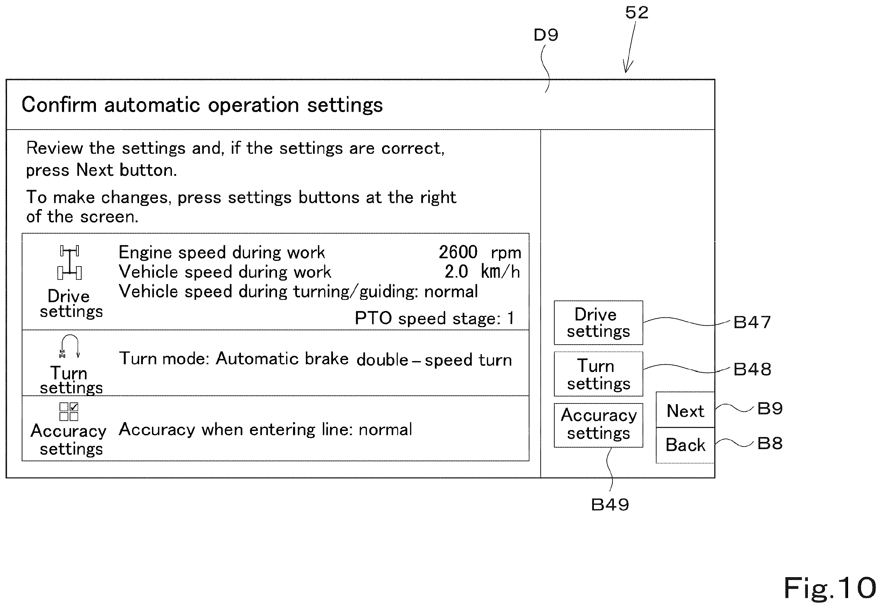

After the travel route L1 and the like are displayed on the "route creation 2" screen D7, upon selection of the "next" key B9 by the user, the controller 51 causes the display operation interface 52 to display a "confirm automatic operation settings" screen D9 as illustrated in FIG. 10. At this time the internal memory of the controller 51 already stores the route information such as the areas C1 and E1, the travel route L1, the starting point Ps, and the goal point Pg displayed on the left portion of the "route creation 2" screen D7, and the job settings (values of setting items) displayed on the right portion of the "route creation 2" screen D7.

The "confirm automatic operation settings" screen D9 as illustrated in FIG. 10 displays a message indicating instructions for input operations, information about work in automatic operation (hereinafter "automatic operation/work information"), settings keys B47 to B49, a "next" key B9, and a "back" key B8. The automatic operation/work information includes job setting(s) for the agricultural job performed by the working device 2 while the agricultural machine 1 operates automatically. The automatic operation/work information includes the rotation speed of the engine (prime mover 4) during the agricultural job, the vehicle speed of the traveling vehicle body 3 performing the agricultural job, the vehicle speed of the traveling vehicle body 3 making a turn, PTO speed stage, turn mode, the accuracy of matching between the traveling vehicle body 3 and the travel route L1 when entering the travel route L1, and/or the like. Preregistered automatic operation/work information is displayed on the "confirm automatic operation settings" screen D9 in FIG. 10.

The user can change the rotation speed of the engine (prime mover 4) during the agricultural job, the vehicle speed of the traveling vehicle body 3 performing the agricultural job, the vehicle speed of the traveling vehicle body 3 making a turn, and the PTO speed stage by selecting the "drive settings" key B47 and performing a predetermined input operation. The user can also change the turn mode of the agricultural machine 1 by selecting the "turn settings" key B48 and performing a predetermined input operation. The user can also change the accuracy of matching between the traveling vehicle body 3 and the travel route L1 when entering the travel route L1 by selecting the "accuracy settings" key B49 and performing a predetermined input operation.

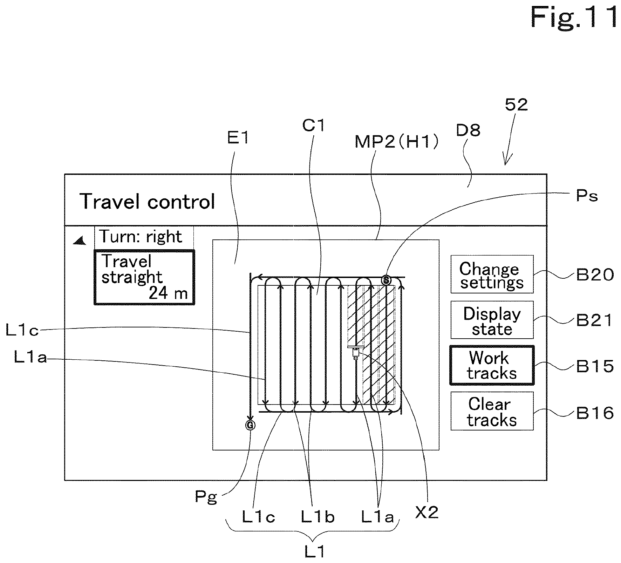

Upon selection of the "next" key B9 by the user on the "confirm automatic operation settings" screen D9, the controller 51 causes the internal memory to store the automatic operation/work information including the job settings displayed on the screen D9, and causes the display operation interface 52 to display a "travel control" screen D8 as illustrated in FIG. 11. The controller 51 generates automatic travel data based on the settings information stored in the internal memory, and transmits (outputs) the automatic travel data to the controller 60 of the agricultural machine 1 via the communicator 54. The automatic travel data includes route information, the type of working device 2, and the automatic operation/work information. The information of the travel route L1 included in the route information in the automatic travel data includes information indicative of the positions of the straight route portions L1a and L1s which are work route portions, and does not need to include information indicative of the positions of the turn route portions L1b and L1r.

The "travel control" screen D8 as illustrated in FIG. 11 displays the manner in which the agricultural machine 1 travels and the manner in which the working device 2 performs a job in the automatic traveling-and-working mode. Note that the "travel control" screen D8 in FIG. 11 displays the manner in which the agricultural machine 1 travels and the manner in which a job is performed, after a certain period from the start of the automatic traveling-and-working mode. The "travel control" screen D8 displays the agricultural field map MP2, the travel route L1, the starting point Ps, the goal point Pg, the agricultural machine symbol X2, the manner in which the agricultural machine 1 travels, a "change settings" key B20, a "display state" key B21, a "work tracks" key B15, and a "clear tracks" key B16.

The controller 51 acquires, via the communicator 54, the actual position of the traveling vehicle body 3 detected by the positioning device 40 at predetermined intervals, and causes the agricultural machine symbol X2 to be always displayed at the point on the agricultural field map MP2 that corresponds to the actual position of the traveling vehicle body 3. That is, the agricultural machine symbol X2 on the "travel control" screen D8 indicates the actual position of the traveling vehicle body 3 of the agricultural machine 1.

For example, the user manually operates the agricultural machine 1 to move to the starting point Ps while looking at the "travel control" screen D8, and then performs a predetermined operation using the mode switch 65 (FIG. 1) to place the agricultural machine 1 in the automatic traveling-and-working mode. With this, the automatic operation controller 61 (FIG. 1) is brought into the automatic traveling-and-working mode, and causes the working device 2 to do ground work while causing the traveling vehicle body 3 to travel in automatic operation based on the automatic travel data received from the agricultural assistance apparatus 50 and the position of the traveling vehicle body 3 detected by the positioning device 40.

Specifically, the automatic operation controller 61 first reads the route information included in the automatic travel data to acquire the travel route L1 (work route portions L1a and L1s), the starting point Ps, and the goal point Pg. Next, the automatic operation controller 61 causes the working device 2 to do ground work while causing the traveling vehicle body 3 to travel in automatic operation based on the straight route portions L1a of the travel route L1 from the starting point Ps. When the traveling vehicle body 3 (agricultural machine 1) reaches the end point of one of adjacent straight route portions L1a, the automatic operation controller 61 interrupts the ground work done by the working device 2, causes the working device 2 to be raised, and causes the traveling vehicle body 3 to turn toward the starting point of the other of the adjacent route portions L1a. That is, the automatic operation controller 61 causes the agricultural machine 1 and the working device 2 to turn in an area corresponding to a turn route portion L1b. In so doing, the automatic operation controller 61 causes the agricultural machine 1 and the working device 2 to turn based on position information of the areas C1 and E1, position information of the straight route portions L1a, size information of the agricultural machine 1 and the working device 2, the position of the traveling vehicle body 3 detected by the positioning device 40, the results of detection by the detector 64, and/or the like.

Next, when the traveling vehicle body 3 reaches the starting point of the other of the adjacent straight route portions L1a, the automatic operation controller 61 causes the working device 2 to be lowered, and resumes the ground work by the working device 2 when causing the traveling vehicle body 3 to start traveling in automatic operation based on the other of the adjacent straight route portions L1a. With this, the traveling vehicle body 3 travels straight back and forth in automatic operation in the central area C1 and ground work is done by the working device 2 on the central area C1.

Then, the automatic operation controller 61 causes the working device 2 to do ground work while causing the traveling vehicle body 3 to travel in automatic operation based on the go-around route portion L1c and the position of the traveling vehicle body 3. In so doing, the automatic operation controller 61 causes the working device 2 to do ground work while causing the traveling vehicle body 3 to travel in automatic operation based on the straight route portions L1s, and, when causing the traveling vehicle body 3 to turn in an area corresponding to a turn route portion L1r, causes the working device 2 to be raised to stop the ground work. The turn is performed in the following manner: the automatic operation controller 61 causes the agricultural machine 1 and the working device 2 to turn based on the position information of the areas C1 and E1, the position information of the straight route portions L1s, the size information of the agricultural machine 1 and the working device 2, the position of the traveling vehicle body 3 detected by the positioning device 40, the results of detection by the detector 64, and/or the like. With this, the traveling vehicle body 3 travels around the central area C1 in automatic operation, and the working device 2 does ground work on the headland E2a surrounding the central area C1 (see FIG. 9D, for example).

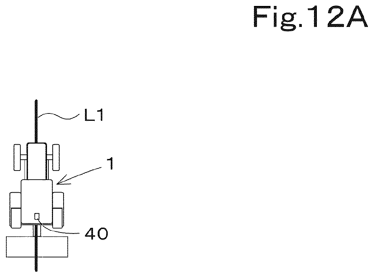

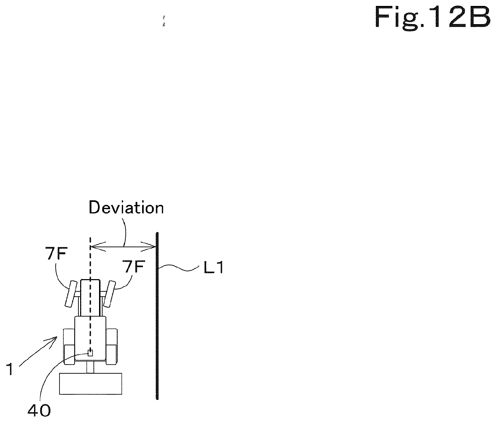

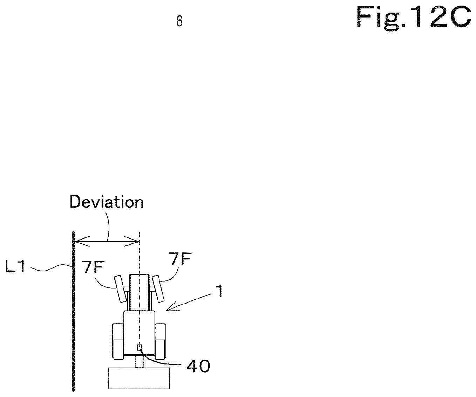

FIGS. 12A to 12D illustrate automatic steering of the agricultural machine 1. In the automatic traveling-and-working mode, the automatic operation controller 61 calculates the deviation of the position of the traveling vehicle body 3 detected by the positioning device 40 from the travel route L1 (work route portions L1a and L1s), while causing the traveling vehicle body 3 to travel automatically. If the deviation is less than a threshold (for example, FIG. 12A), the automatic operation controller 61 maintains the angle of rotation of the steering shaft 31 (FIG. 1). If the deviation of the position of the traveling vehicle body 3 from the travel route L1 is equal to or more than the threshold and the traveling vehicle body 3 is positioned leftward of the travel route L1 (for example, FIG. 12B), the automatic operation controller 61 rotates the steering shaft 31 so that the traveling vehicle body 3 is steered right. If the deviation of the position of the traveling vehicle body 3 from the travel route L1 is equal to or more than the threshold and the traveling vehicle body 3 is positioned rightward of the travel route L1 (for example, FIG. 12C), the automatic operation controller 61 rotates the steering shaft 31 so that the traveling vehicle body 3 is steered left.

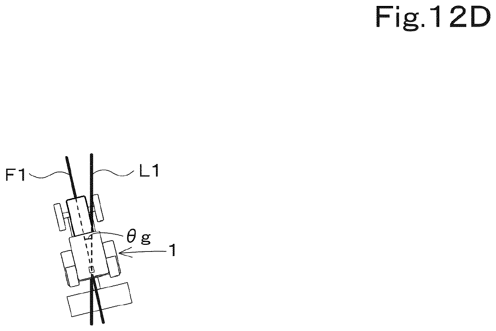

The steering angle of (the steering angle achieved by) the steering unit 29 is changed based on the deviation of the position of the traveling vehicle body 3 from the travel route L1 in the above example. Note, however, that, for another example, the steering angle of the steering unit 29 may be changed based on the angle θg of the direction-of-travel F1 of the traveling vehicle body 3 to the travel route L1 as illustrated in FIG. 12D. In such a case, for example, the automatic operation controller 61 calculates the direction-of-travel F1 of the traveling vehicle body 3 from changes in position of the traveling vehicle body 3, and calculates the angle θg of the direction-of-travel F1 to the travel route L1. If the angle θg is equal to or greater than a threshold, the automatic operation controller 61 rotates the steering shaft 31 so that the direction-of-travel F1 of the traveling vehicle body 3 matches the direction of the travel route L1 (i.e., so that the angle θg is zero degrees).

For another example, the automatic operation controller 61 may calculate a first steering angle based on the deviation of the position of the traveling vehicle body 3 from the travel route L1 and calculate a second steering angle based on the travel route L1 and the direction-of-travel F1 of the traveling vehicle body 3. The automatic operation controller 61 may then calculate a third steering angle based on the first steering angle and the second steering angle and rotate the steering shaft 31 based on the third steering angle.

The automatic operation controller 61 calculates the actual vehicle speed of the traveling vehicle body 3 based on changes in position of the traveling vehicle body 3 while the automatic operation controller 61 is causing the traveling vehicle body 3 to travel automatically based on the travel route L1. The automatic operation controller 61 then controls the driving of the transmission 5, the brake 6, and the prime mover 4 so that the actual vehicle speed matches the vehicle speed associated with the straight route portion L1a or L1s or turning movement.

As has been discussed, when the agricultural machine 1 is in the automatic traveling-and-working mode, the automatic operation controller 61 automatically steers the traveling vehicle body 3 while automatically changing the travel speed of the traveling vehicle body 3 based on the travel route L1 and the position of the traveling vehicle body 3 (agricultural machine 1). The automatic operation controller 61 also automatically causes the working device 2 to perform an agricultural job (ground work) and stop the agricultural job (ground work).

In the automatic traveling-and-working mode, the status detector 51d (FIG. 1) of the agricultural assistance apparatus 50 detects the operating states of the agricultural machine 1 and the working device 2 based on the results of detection from the positioning device 40 and the detector 64 or on the log data acquired from the controller 60. Upon selection of the "display state" key B21 by the user on the "travel control" screen D8 as illustrated in FIG. 11, the controller 51 causes a pop-up window, indicative of the operating states of the agricultural machine 1 and the working device 2 detected by the detector 64 and the status detector 51d, to appear on the "travel control" screen D8.

Upon selection of the "work tracks" key B15 by the user, the controller 51 calculates actual work track(s) on which the working device 2 has done the ground work, based on the positions of the traveling vehicle body 3 detected by the positioning device 40 and the work width of the working device 2. The controller 51 then causes the actual work track(s) (hatched portions in FIG. 11) to be displayed such that the actual work track(s) are superimposed on the straight route portions L1a and/or L1s of the agricultural field map MP2. Upon selection of the "clear tracks" key B16 by the user, the controller 51 causes the work track(s) to disappear.

The automatic operation controller 61 of the agricultural machine 1 causes the working device 2 to do ground work while causing the traveling vehicle body 3 to travel in automatic operation based on the travel route L1 and the position of the traveling vehicle body 3, so that the working device 2 reaches the goal point Pg. Upon reaching the goal point Pg, the automatic operation controller 61 stops the automatic traveling-and-working mode to stop the traveling vehicle body 3 and the working device 2. This is the end of the agricultural job performed by the agricultural machine 1 and the working device 2 based on the travel route L1 in the automatic traveling-and-working mode.

Upon detection of the end of the agricultural job by the status detector 51d, the recorder 51e compares the settings information of the agricultural machine 1 (the type of agricultural job and the type of agricultural machine 1 on the screen D4a in FIG. 5A) stored in the internal memory of the controller 51 with its corresponding settings information of the agricultural machine 1 registered in the memory 53. If the settings information of the agricultural machine 1 stored in the internal memory and the corresponding settings information of the agricultural machine 1 registered in the memory 53 do not match each other, the recorder 51e replaces the corresponding settings information of the agricultural machine 1 registered in the memory 53 with the settings information of the agricultural machine 1 stored in the internal memory to update the corresponding settings information of the agricultural machine 1 registered in the memory 53 (i.e., overwrites the corresponding settings information of the agricultural machine 1 registered in the memory 53 with the settings information of the agricultural machine 1 stored in the internal memory).

The recorder 51e also compares the settings information of the working device 2 (the size information and the type of working device 2 on the screen D4c in FIG. 5C) stored in the internal memory of the controller 51 with its corresponding settings information of the working device 2 registered in the memory 53. If the settings information of the working device 2 stored in the internal memory and the corresponding settings information of the working device 2 registered in the memory 53 do not match each other, the recorder 51e replaces the corresponding settings information of the working device 2 registered in the memory 53 with the settings information of the working device 2 stored in the internal memory to update the corresponding settings information of the working device 2 registered in the memory 53. The recorder 51e also overwrites the previous work (the screen D4b in FIG. 5B, the screen D4c in FIG. 5C) included in the settings information of the working device 2 registered in the memory 53 with "Previous work: Yes".

The recorder 51e may record (store), in a predetermined area of the memory 53 as a work history, the settings information of the agricultural machine 1, the settings information of the working device 2, the settings information of the agricultural field (information of the agricultural field map MP2 selected on the screen D5 in FIG. 6), job settings (settings information on the screen D6 in FIG. 7, the screen D7 in the drawings such as FIG. 8A, and the screen D9 in FIG. 10), and route information (the areas C1 and E1, the travel route L1, and the positions Ps and Pg on the screen D7 in FIG. 8B and the screen D8 in FIG. 11) stored in the internal memory of the controller 51 such that these pieces of information are associated with the identification information of the agricultural machine 1 and the identification information of the working device 2. In such a case, the work history may include the start date and time and/or the end date and time of the agricultural job performed by the agricultural machine 1 and the working device 2 based on the travel route L1 in the automatic traveling-and-working mode.

The modes in which the agricultural machine 1 can operate include not only the automatic traveling-and-working mode but also the automatic steering-and-working mode, as mentioned earlier. In the automatic traveling-and-working mode and the automatic steering-and-working mode, the ground work is appropriately done automatically by the working device 2. The working modes in which the agricultural machine 1 can operate include a manual-operation-and-working mode in addition to the automatic traveling-and-working mode and the automatic steering-and-working mode. In the manual-operation-and-working mode, a user of the agricultural machine 1 operates the accelerator member or the brake member of the manual operator 62 to change the travel speed of the traveling vehicle body 3, and operates the steering wheel 30 to steer the traveling vehicle body 3. In the manual-operation-and-working mode, the ground work by the working device 2 may be performed and stopped by the user operating the manual operator 62 or may be performed and stopped under control of the automatic operation controller 61 based on the position of the traveling vehicle body 3 and the travel route L1. In addition to the above-mentioned modes, for example, the agricultural machine 1 can operate in an automatic travel mode in which the traveling vehicle body 3 is caused to travel in automatic operation but the working device 2 is not caused to automatically do ground work, and an automatic steering mode in which the traveling vehicle body 3 is automatically steered but the working device 2 is not caused to automatically do ground work.

For example, upon selection of the "automatic steering" key B2b by the user on the home screen D1 in FIG. 3, screens similar to the screens D3 to D9 which are displayed upon selection of the "automatic operation" key B2a are displayed on the display operation interface 52 in order. On each of such screens, the user can make settings for the automatic steering-and-working mode to be performed, in a similar manner to the settings for the automatic traveling-and-working mode to be performed.

The controller 51 causes the internal memory to store various types of settings information for the automatic steering-and-working mode to be performed, similarly to various types of settings information for the automatic traveling-and-working mode to be performed. The route creator 51c creates a travel route for the automatic steering-and-working mode based on the various types of settings information stored in the internal memory of the controller 51. The controller 51 then causes the display operation interface 52 to display route information including the travel route, generates automatic steering data including the route information, and transmits (outputs) the automatic steering data to the agricultural machine 1 via the communicator 54. Upon receipt of the automatic steering data by the communicator 54 of the agricultural machine 1, the automatic operation controller 61 of the controller 60 is brought into the automatic steering-and-working mode, and causes the working device 2 to do ground work while automatically steering the traveling vehicle body 3 based on the travel route included in the automatic steering data and the position of the traveling vehicle body 3.

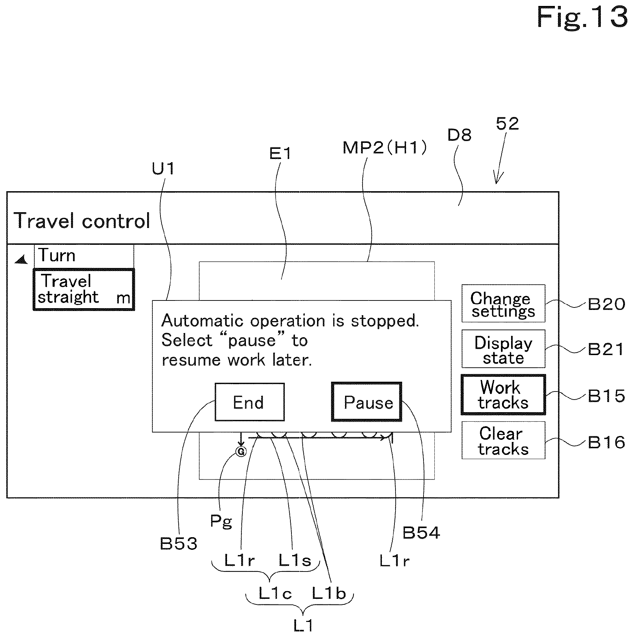

It is noted that, for example, there may be cases in which, while the agricultural machine 1 and the working device 2 are performing an agricultural job on an agricultural field based on the travel route L1 in the automatic traveling-and-working mode, the user performs a certain operation using the manual operator 62 of the agricultural machine 1 for some reason to stop the agricultural machine 1 and the working device 2. In such cases, the notifier 51g causes a pop-up notification U1 (see FIG. 13) to appear on the "travel control" screen D8 of the display operation interface 52.

The notification U1 displays a message indicating that the automatic operation of the agricultural machine 1 has been stopped, a message indicating an input operation to be made to interrupt (pause) the agricultural job so that the agricultural job can be restarted (resumed) later, an "end" key B53, and a "pause" key B54. If the user selects the "end" key B53 to end the agricultural job without restarting it by the agricultural machine 1 later, the controller 51 stops the automatic traveling-and-working mode. This is the end of the agricultural job based on the travel route L1.

Upon detection of the end of the agricultural job by the status detector 51d, the recorder 51e detects the identification information of the working device 2, and replaces, with the settings information of the agricultural machine 1 and the settings information of the working device 2 stored in the internal memory of the controller 51, the settings information of the agricultural machine 1 and the settings information of the working device 2 that are part of the information registered in the memory 53 and that are associated with the detected identification information of that working device 2, respectively, to update them. The recorder 51e also overwrites the information indicative of the presence or absence of previous job, which is included in the specific information included in the updated settings information of the working device 2, with "Previous job: Yes". The recorder 51e may record, in a predetermined area of the memory 53 as a work history, the settings information of the agricultural machine 1, the settings information of the working device 2, the settings information of the agricultural field, the job setting(s), and the route information stored in the internal memory of the controller 51 such that these pieces of information are associated with the identification information of the agricultural machine 1 and the identification information of the working device 2.

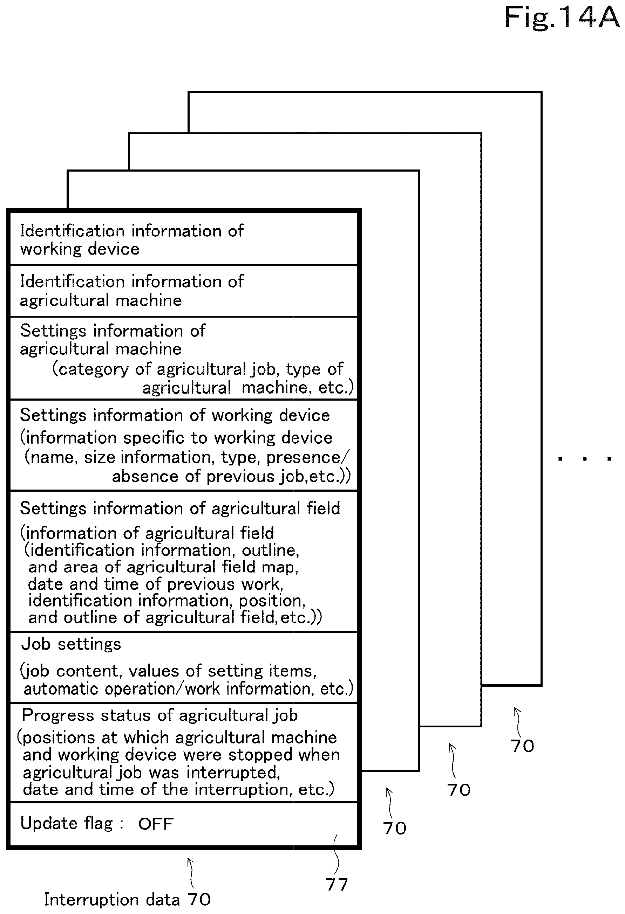

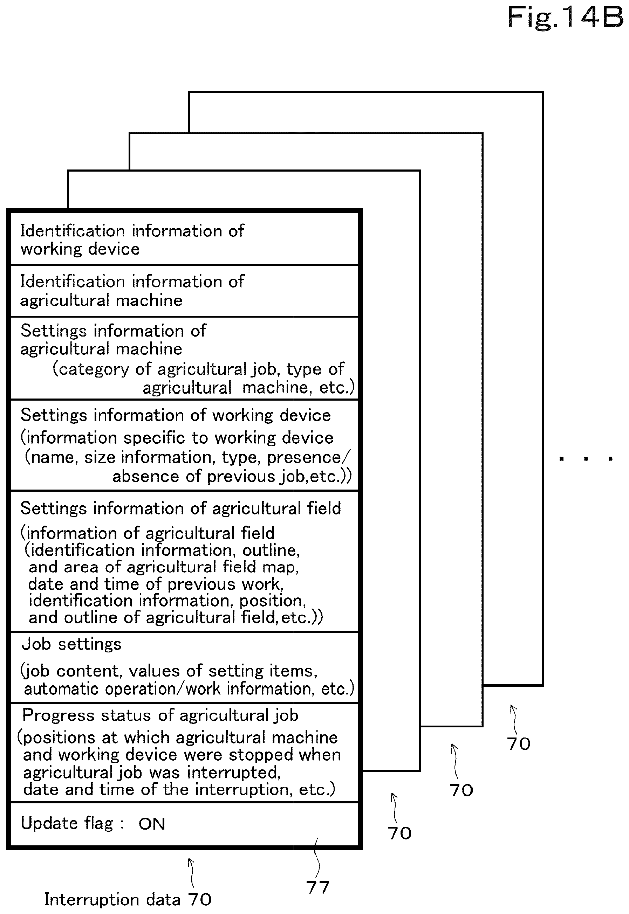

On the other hand, if the user selects the "pause" key B54 to restart the agricultural job later by the agricultural machine 1, the controller 51 stops the automatic traveling-and-working mode, so that the agricultural job based on the travel route L1 in the automatic traveling-and-working mode is interrupted. Upon detection of the interruption of the agricultural job by the status detector 51d, the recorder 51e detects the identification information of the working device 2, and generates interruption data 70 (see FIG. 14) in which the settings information stored in the internal memory of the controller 51, the result of detection by the status detector 51d, the date and time of interruption of the agricultural job, update flag, and/or the like are associated with the identification information. The recorder 51e then causes the memory 53 to record the interruption data 70 in a predetermined area thereof, so that the interruption data 70 is recorded (stored).

FIGS. 14A and 14B each illustrate the interruption data 70. The interruption data 70 includes identification information of the working device 2 and identification information of the agricultural machine 1. The interruption data 70 also includes the settings information of the agricultural machine 1 (the category of the agricultural job set on the screen D3 in FIG. 4, the type of agricultural machine 1 set on the screen D4a in FIG. 5A), the settings information of the working device 2 (information (the name, size information and type of the working device 2, and the presence/absence of previous job) specific to the working device 2 selected on the screen D4b in FIG. 5B and set on the screen D4c in FIG. 5C), and the settings information of the agricultural field (information of the agricultural field map MP2 selected on the screen D5 in FIG. 6 (e.g., identification information, outline, and area of the agricultural field map MP2, date and time of the previous job, identification information, position, and outline and/or the like of the agricultural field corresponding to the agricultural field map MP2)), and the job settings (work content set on the screen D6 in FIG. 7, values of setting items on the screen D7 such as those in FIG. 8A, automatic operation/work information set on the screen D9 in FIG. 10) which are stored in the internal memory of the controller 51.

The interruption data 70 also includes, as the result of detection by the status detector 51d, the progress status of the agricultural job performed by the agricultural machine 1 and the working device 2 based on the travel route L1. The progress status of the agricultural job includes the position at which the agricultural machine 1 and the working device 2 stopped when the agricultural job was interrupted, the date and time of the interruption of the agricultural job, and/or the like. The date and time of the interruption of the agricultural job are detected by the status detector 51d based on the date and time measured by the internal memory of the controller 51, and are outputted to the recorder 51e. The interruption data 70 also includes an update flag 77. The recorder 51e turns OFF the update flag 77 as shown in FIG. 14A when generating the interruption data 70. The recorder 51e may additionally or alternatively include, in the interruption data 70, for example, the mode in which the agricultural machine 1 was in immediately before the interruption, and record such interruption data 70 in the memory 53.

There is a demand to change the size information of the working device 2 set on the agricultural assistance apparatus 50 during the interruption of the agricultural job performed by the agricultural machine 1 and the working device 2 based on the travel route L1 because of, for example, replacement or maintenance of the working device 2 or some other reasons. To meet such a demand, a user is allowed to change the size information of the working device 2 by operating the agricultural assistance apparatus 50. Specifically, for example, the user first starts up the agricultural assistance apparatus 50, selects the "settings" key B0 (FIG. 3) on the home screen D1 displayed by the display operation interface 52, and performs a predetermined input operation to cause the display operation interface 52 to display the "confirm working device settings" screen D4c (FIG. 5C).

Then, the user selects the "width settings" key B37 on the "confirm working device settings" screen D4c to cause the display operation interface 52 to display the "width settings" screen D4d as illustrated in FIG. 5D, and then the user inputs the changed total with and work width of the working device 2 into the input fields K1 and K2 of the "width settings" screen D4d as described earlier. Alternatively or additionally, the user selects the "length settings" key B38 on the "confirm working device settings" screen D4c to cause the display operation interface 52 to display the "length settings" screen D4e as illustrated in FIG. 5E, and then the user inputs the changed total length and work position of the working device 2 into the input fields K3 and K4 of the "length settings" screen D4e as described earlier.

After the user inputs the changed size information of the working device 2 on the settings screen(s) D4d and/or D4e as described above, upon selection of the "next" key B9 by the user, the controller 51 causes the display operation interface 52 to display the "confirm working device settings" screen D4c in which the changed size information is reflected. The recorder 51e receives the changed size information of the working device 2 and detects identification information of the working device 2 corresponding to the inputted changed size information. Next, the recorder 51e reads the size information of the working device 2 in a specific piece of interruption data 70 which is one of one or more pieces of interruption data 70 stored in the memory 53 and which is associated with identification information identical to that of the working device 2 corresponding to the changed size information. The recorder 51e associates the size information of the working device 2 in the specific piece of interruption data 70 with the foregoing identical identification information, and store them as data-for-restoration in a predetermined area of the memory 53. Next, the recorder 51e updates the size information of the working device 2 in the interruption data 70 by overwriting the size information of the working device 2 in the interruption data 70 with the changed size information. The recorder 51e turns ON the update flag 77 included in the interruption data 70 in which the size information of the working device 2 has been updated (see FIG. 14B).

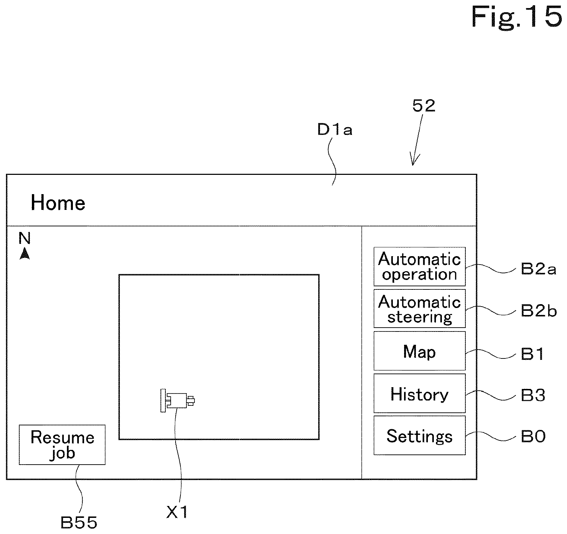

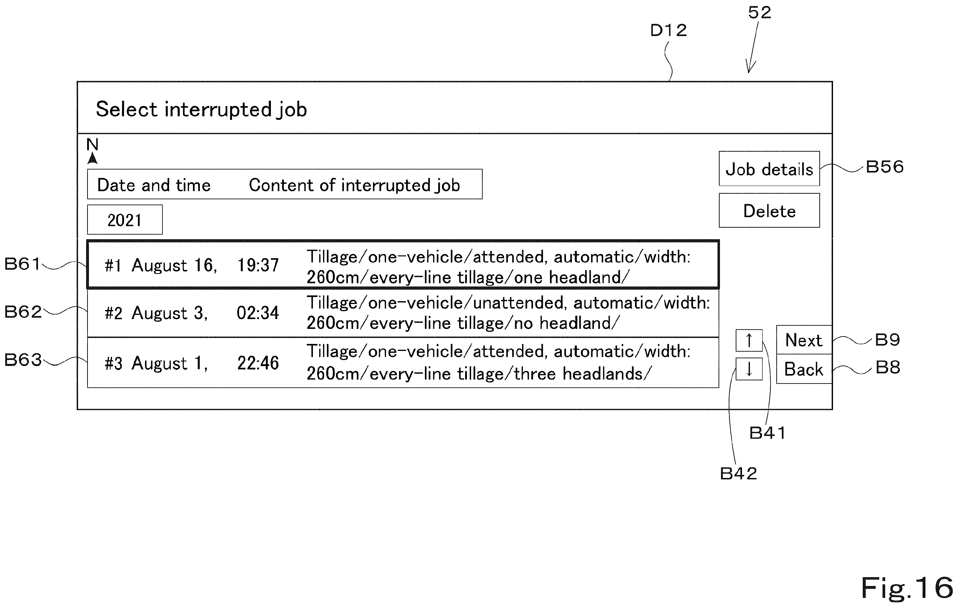

Then, upon startup of the agricultural assistance apparatus 50 by the user to resume the interrupted agricultural job, the controller 51 confirms that one or more pieces of interruption data 70 are stored in the memory 53, and causes the display operation interface 52 to display the home screen D1a including a "resume job" key B55 as illustrated in FIG. 15. Upon selection of the "resume job" key B55 by the user on the home screen D1a, the controller 51 causes the display operation interface 52 to display a "select interrupted job" screen D12 as illustrated in FIG. 16.

The "select interrupted job" screen D12 displays interruption data keys B61 to B63. The controller 51 reads all the pieces of interruption data 70 from the memory 53, and causes partial content of the pieces of interruption data 70 to be displayed on their corresponding interruption data keys B61 to B63. The partial content of the interruption data 70 includes date and time of interruption, the category of the agricultural job, the type of agricultural machine 1, the work width of a working device 2, job type, and the number of times of work in headland(s). In FIG. 16, the interruption data keys B61 to B63 corresponding to three pieces of interruption data 70 are displayed. However, when four or more pieces of interruption data 70 are stored in the memory 53, upon selection of the up-pointing arrow key B41 or the down-pointing arrow key B42 by the user, the controller 51 causes interruption data key(s) corresponding to other piece(s) of interruption data 70 to be displayed on the "select interrupted job" screen D12.

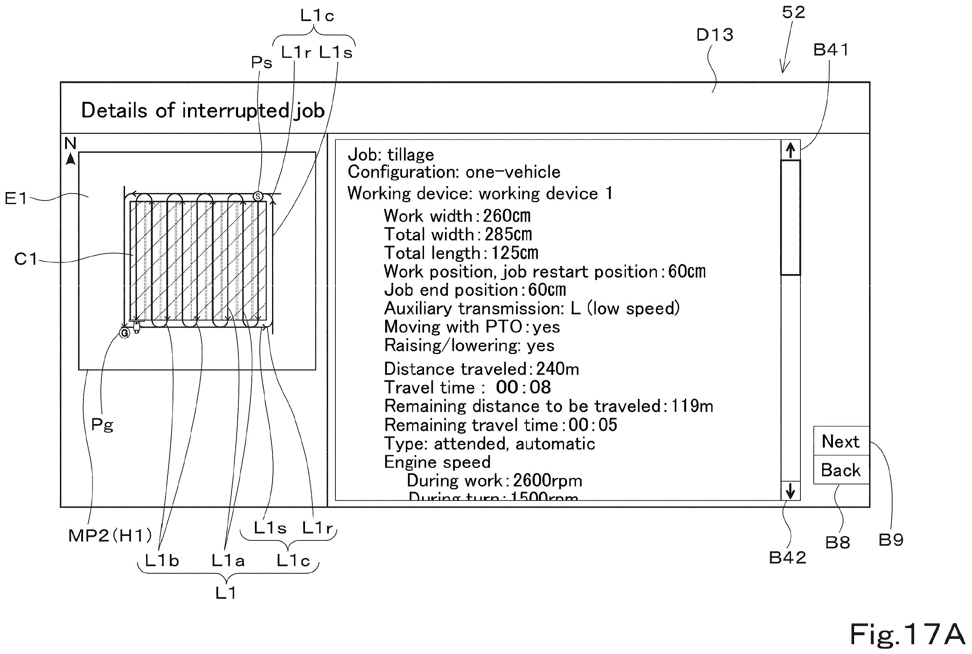

Upon selection of a "job details" key B56 after selection of one of the interruption data keys B61 to B63 on the "select interrupted job" screen D12 that represents content of the agricultural job and/or the like that the user wishes to resume, the controller 51 reads a specific piece of interruption data 70 that corresponds to the selected one of the interruption data keys B61 to B63 from the memory 53. Next, as illustrated in FIG. 17A, the controller 51 causes the display operation interface 52 to display a "details of interrupted job" screen D13 showing details of the specific piece of interruption data 70.

The "details of interrupted job" screen D13 displays the category of the agricultural job, configuration and size information of the working device 2, the types of the working device 2 and the agricultural machine 1, the progress status of the agricultural job, automatic operation/work information, the agricultural field map MP2, and/or the like which are included in the specific piece of interruption data 70. The "details of interrupted job" screen D13 also displays an up-pointing arrow key B41, a down-pointing arrow key B42, a "next" key B9, and a "back" key B8. Upon selection of the up-pointing arrow key B41 or the down-pointing arrow key B42 by the user, the controller 51 causes another information included in the specific piece of interruption data 70 that is not displayed on the "details of interrupted job" screen D13 to appear on the "details of interrupted job" screen D13.

Upon selection of the "next" key B9 by the user on the "details of interrupted job" screen D13, the controller 51 checks the update flag 77 included in the specific piece of interruption data 70. If the update flag 77 is OFF (FIG. 14A), the area definer 51b defines the central area C1 and the headland area E1 again based on the outline H1 of the agricultural field, the work width of the working device 2, the inputted number of headlands, and/or the overlap-on-headland which are included in the specific piece of interruption data 70. The route creator 51c creates the travel route L1 again based on the work width of the working device 2, the inputted working direction, overlap-on-headland, overlap-in-central-portion, and/or the areas C1 and E1 which are included in the specific piece of interruption data 70, and sets the starting point Ps and the goal point Pg again. That is, the route creator 51c prepares the travel route L1 again based on the size information of the working device 2 that was not updated during the interruption of agricultural job.

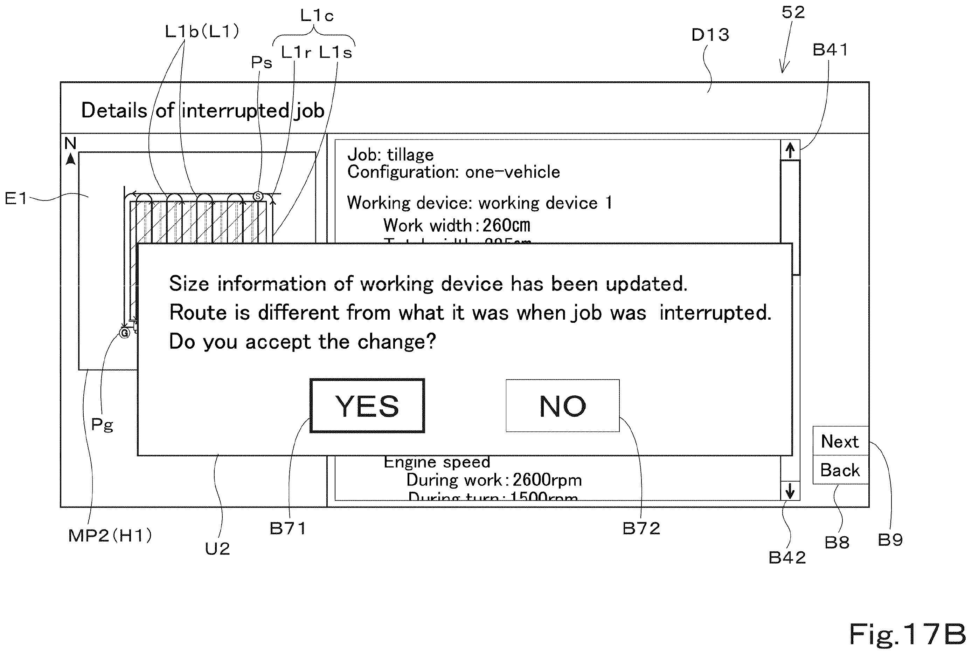

In contrast, if the update flag 77 included in the piece of interruption data 70 selected on the "select interrupted job" screen D12 is ON (FIG. 14B), the notifier 51g (FIG. 1) causes the display operation interface 52 to display a pop-up window indicative of a notification U2 as illustrated in FIG. 17B on the "details of interrupted job" screen D13. The notification U2 displays a message indicating that the size information of the working device 2 has been updated and that the travel route L1 based on which the agricultural job is resumed is different from what it was when the agricultural job was interrupted, and asking whether such a different travel route L1 is acceptable to the user. The notification U2 also displays a YES key B71 and a NO key B72 for use in responding to the ask message.

Assume that the user looks at the content of the notification U2, determines that the travel route L1 based on which the agricultural job is resumed and which is different from what it was when the agricultural job was interrupted is acceptable, and selects the YES key B71. In such a case, the area definer 51b defines the central area C1 and the headland area E1 again based on the outline H1 of the agricultural field, the work width of the working device 2, the number of headlands, and/or the overlap-on-headland which are included in the specific piece of interruption data 70 selected on the "select interrupted job" screen D12. Furthermore, the route creator 51c creates the travel route L1 again based on the work width of the working device 2, working direction, overlap-on-headland, overlap-in-central-portion, and/or the areas C1 and E1 which are included in the specific piece of interruption data 70, and sets the starting point Ps and the goal point Pg again. That is, the route creator 51c creates the travel route L1 again based on the size information of the working device 2 that was updated during the interruption of the agricultural job. Thus, the travel route L1 created again differs from what it was when the agricultural job was interrupted.

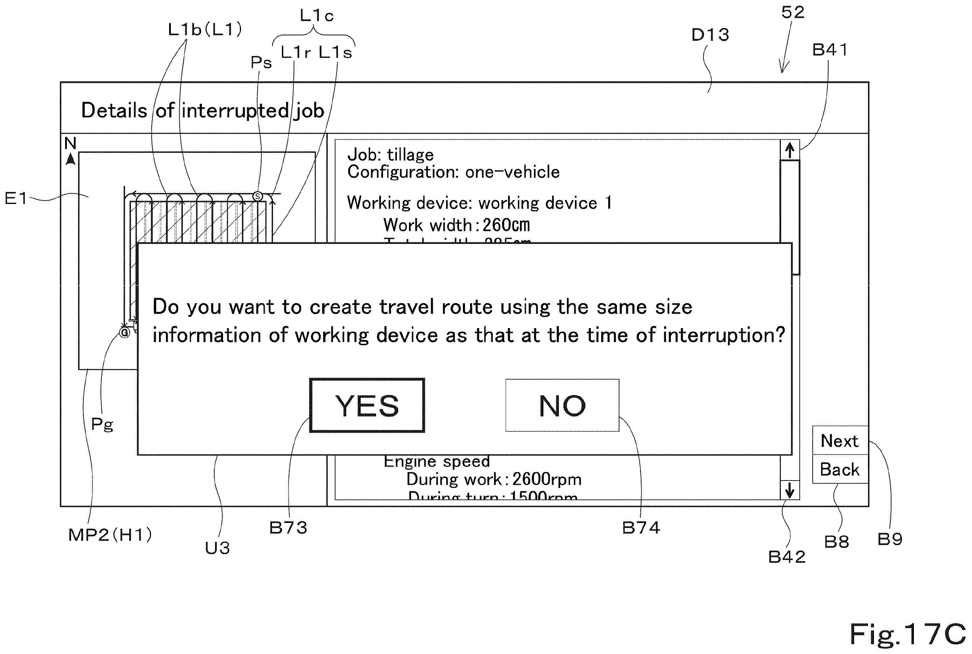

Assume that the user looks at the content of the notification U2, determines that the travel route L1 based on which the agricultural job is resumed and which is different from what it was when the agricultural job was interrupted is unacceptable, and selects the NO key B72. In such a case, the notifier 51g causes the display operation interface 52 to make the notification U2 disappear and then display a pop-up window indicative of a notification U3 as illustrated in FIG. 17C on the "details of interrupted job" screen D13. The notification U3 displays a message asking whether to create a travel route L1 based on the same information (size information) of the working device 2 as what it was when the agricultural job was interrupted, and a YES key B73 and a NO key B74 for use in responding to the ask message.

Assume that the user looks at the content of the notification U3, determines not to create a travel route L1 based on the same information of the working device 2 as what it was when the agricultural job was interrupted, and selects the NO key B74. In such a case, the notifier 51g causes the notification U3 to disappear and causes a pop-up window of the notification U2 as illustrated in FIG. 17B to appear again on the "details of interrupted job" screen D13.

Assume that the user looks at the content of the notification U3 (FIG. 17C), determines to create a travel route L1 based on the same information of the working device 2 as what it was when the agricultural job was interrupted, and selects the YES key B73. In such a case, the controller 51 checks the identification information of the working device 2 included in the specific piece of interruption data 70 selected on the "select interrupted job" screen D12, and reads, from the memory 53, the size information of the working device 2 included in the data-for-restoration that is associated with that identification information.

Next, the area definer 51b defines the central area C1 and the headland area E1 again based on the work width included in the size information in the data-for-restoration read by the controller 51 (work width in the data-for-restoration) and on the outline H1 of the agricultural field, the number of headlands, and/or the overlap-on-headland which are included in the specific piece of interruption data 70. Furthermore, the route creator 51c creates the travel route L1 again based on the work width in the data-for-restoration and on the working direction, overlap-on-headland , overlap-in-central-portion, and/or the areas C1 and E1 which are included in the specific piece of interruption data 70, and sets the starting point Ps and the goal point Pg again. That is, even if the size information of the working device 2 is updated during the interruption of the agricultural job, the route creator 51c creates the travel route L1 again based on the pre-update size information of the working device 2. Thus, the travel route L1 created again is the same as what it was when the agricultural job was interrupted.

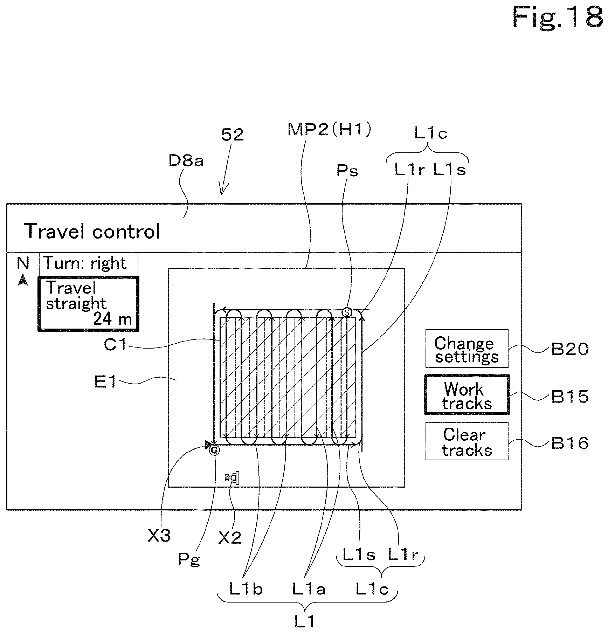

Once the route creator 51c has created the travel route L1 again, the controller 51 causes the display operation interface 52 to display the "travel control" screen D8a, and causes such route information set again by the area definer 51b and the route creator 51c to be displayed on the agricultural field map MP2 on the "travel control" screen D8a (see FIG. 18). Furthermore, the controller 51 acquires the current position of the agricultural machine 1 via the positioning device 40 and the status detector 51d, and causes the current position X2 of the agricultural machine 1 and a position X3 at which the agricultural machine 1 is located when the agricultural job is resumed and which is included in the specific piece of interruption data 70 (such a position is represented by a filled triangle in FIG. 18, and hereinafter referred to as "resume position") to be displayed on the agricultural field map MP2. Furthermore, the controller 51 generates automatic travel data based on the specific piece of interruption data 70 and the route information having been set again, and transmits the automatic travel data to the controller 60 of the agricultural machine 1 via the communicator 54.

Next, the user manually operates the agricultural machine 1 to move it to the resume position X3 while looking at the "travel control" screen D8a, and then uses the mode switch 65 (FIG. 1) to perform a predetermined operation to put the agricultural machine 1 in the automatic traveling-and-working mode. With this, the automatic operation controller 61 (FIG. 1) is brought into the automatic traveling-and-working mode, and causes the working device 2 to do ground work while causing the traveling vehicle body 3 to travel in automatic operation based on the automatic travel data received from the agricultural assistance apparatus 50 and on the position of the traveling vehicle body 3 detected by the positioning device 40. That is, the interrupted agricultural job is resumed.

As the automatic operation controller 61 causes the working device 2 to do ground work while causing the traveling vehicle body 3 to travel in automatic operation based on the travel route L1 and on the position of the traveling vehicle body 3, the agricultural machine 1 and the working device 2 arrive at the goal point Pg. Upon the arrival, the automatic operation controller 61 stops the automatic traveling-and-working mode and stops the traveling vehicle body 3 and the working device 2. This completes the resumed agricultural job.

If the update flag 77 included in the specific piece of interruption data 70 read by the controller 51 from the memory 53 at the time of the resumption of the agricultural job is OFF, the recorder 51e deletes the specific piece of interruption data 70 from the memory 53 and from the internal memory when the completion of the agricultural job is detected by the status detector 51d after the resumption of the agricultural job.

If the update flag 77 in the specific piece of interruption data 70 at the time of the resumption of the agricultural job is ON and the YES key B71 of the notification U2 as illustrated in FIG. 17B is selected by the user, the recorder 51e replaces, with the size information of the working device 2 included in the specific piece of interruption data 70, size information of a corresponding working device 2 stored in the memory 53 to update the size information upon detection of the completion of the resumed agricultural job by the status detector 51d. Specifically, the recorder 51e overwrites, with the size information of the working device 2 included in the specific piece of interruption data 70, the size information of a corresponding working device 2 that is one of one or more pieces of size information of working device(s) 2 stored in the memory 53 and that is associated with the same identification information as that of the working device 2 included in the specific piece of interruption data 70. Next, the recorder 51e deletes, from the memory 53, the data-for-restoration associated with the same identification information as that of the working device 2 included in the specific piece of interruption data 70, and deletes the specific piece of interruption data 70 from the memory 53 and from the internal memory.

If the update flag 77 in the specific piece of interruption data 70 at the time of the resumption of the agricultural job is ON and the YES key B73 of the notification U3 as illustrated in FIG. 17C is selected by the user, the recorder 51e does not update the size information of the working device 2 stored in the memory 53 upon detection of the completion of the resumed agricultural job by the status detector 51d. In such a case, the recorder 51e deletes, from the memory 53, the data-for-restoration associated with the same identification information as that of the working device 2 included in the specific piece of interruption data 70, and deletes the specific piece of interruption data 70 from the memory 53 and from the internal memory.

The above-described embodiment discusses an example in which whether or not the size information of the working device 2 was updated during the interruption of agricultural job is determined based on whether the update flag 77 is ON or OFF. Note, however, that this does not imply any limitation. Additionally or alternatively, for example, whether or not the size information of the working device 2 was updated during the interruption of agricultural job may be determined based on the result of comparison between the date and time of interruption of the agricultural job based on the travel route L1 and the date and time of update of the size information of the working device 2.

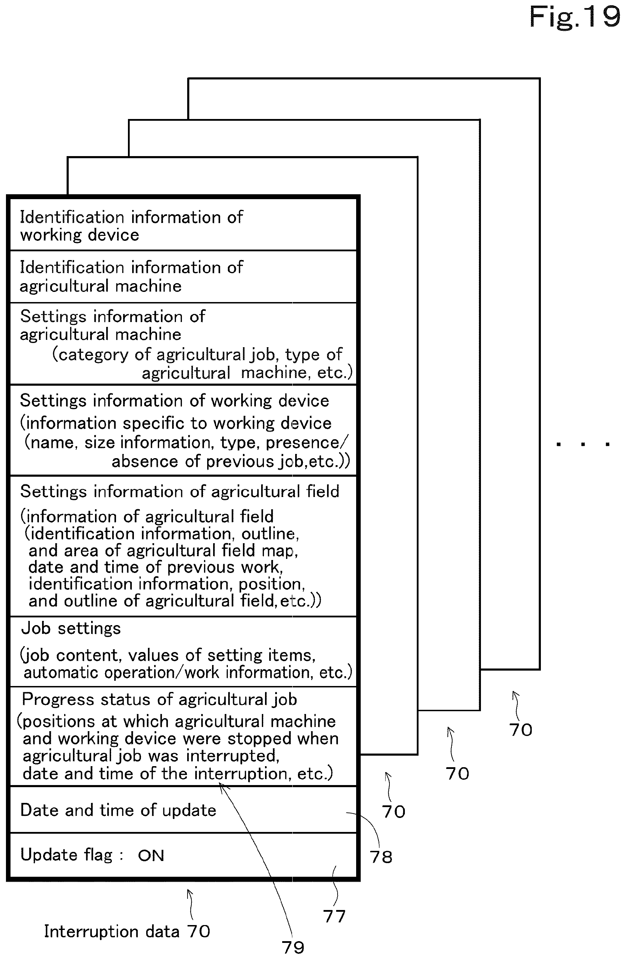

Specifically, for example, when an agricultural job performed by the agricultural machine 1 and the working device 2 based on the travel route L1 is interrupted, the recorder 51e records, in the memory 53, the date and time of the interruption (hereinafter may be referred to as "date-and-time-of-interruption 79") such that the date and time of the interruption are included in interruption data 70 and associated with the identification information of the working device 2. When the size information of the working device 2 included in the interruption data 70 is updated, the recorder 51e records, in the memory 53, the date and time of the update (hereinafter may be referred to as "date-and-time-of-update 78") such that the date and time of the update are included in the interruption data 70 and associated with the identification information of the working device 2 (see FIG. 19).

Then, at the time of the resumption of the agricultural job by the agricultural machine 1 and the working device 2 based on the interruption data 70 including the date-and-time-of-update 78, if the date-and-time-of-update 78 is later than the date-and-time-of-interruption 79 included in the interruption data 70, the notifier 51g determines that the size information of the working device 2 was updated during the interruption and causes the display operation interface 52 to display the notification(s) U2 and/or U3. If the date-and-time-of-update 78 is earlier than or is the same as the date-and-time-of-interruption 79 included in the interruption data 70, the notifier 51g determines that the size information of the working device 2 was not updated during the interruption and does not cause the display operation interface 52 to display the notification U2 or U3, and the route creator 51c creates the travel route L1 again based on the size information of the working device 2 and the job setting(s) included in the interruption data 70.

The above-described embodiment discusses an example in which, upon completion of the agricultural job based on the travel route L1 performed by the agricultural machine 1 and the working device 2, the recorder 51e replaces, with settings information (including the settings information included in interruption data 70) such as the size information of the working device 2 stored in the internal memory of the controller 51, the corresponding settings information stored in the memory 53 to update the corresponding settings information. Note, however, that the update of the settings information stored in the memory 53 may also be performed immediately before and/or immediately after the start of the agricultural job based on the travel route L1, for example.

The above-described embodiment discusses an example in which the travel route L1 is created again using the pre-update size information included in the data-for-restoration in order to resume the agricultural job based on the same travel route L1 as it was when the agricultural job was interrupted. Additionally or alternatively, for example, route information including the travel route L1 may be recorded, as "interrupted route information", in the memory 53 or in the internal memory of the controller 51 at the time of the interruption of the agricultural job, and the controller 51 may read the interrupted route information from the memory 53 or from the internal memory and use the travel route L1 included in the interrupted route information when the agricultural job is resumed.

The above-described embodiment discusses an example case in which an agricultural job performed by the agricultural machine 1 and the working device 2 based on the travel route L1 in the automatic traveling-and-working mode is interrupted and then is resumed. Note, however, that this does not imply any limitation. Also in cases where an agricultural job performed by the agricultural machine 1 and the working device 2 based on the travel route L1 in the automatic steering-and-working mode, the manual-operation-and-working mode, or the like mode is interrupted and then resumed, the travel route L1 may be created again based on whether or not the size information of the working device 2 was updated during the interruption or not, in a similar manner. The working mode of the agricultural machine 1 before the interruption of the agricultural job and the working mode of the agricultural machine 1 after the resumption of the agricultural job may be the same or different.

During the interruption of an agricultural job based on the travel route L1, the display operation interface 52 may display, for example, a screen for input of other size information such as the height of the working device 2 raised by the lifting device 8 (the height of the working device 2 in its non-working position) and/or the height of the working device 2 lowered by the lifting device 8 (the height of the working device 2 in its working position) in addition to or instead of the total width, work width, total length, and work position of the working device 2. The recorder 51e may receive the input of the size information of the working device 2 and updates the size information of the working device 2 included in corresponding interruption data.

The above-described embodiment discusses an example in which the controller 51 of the agricultural assistance apparatus 50 includes the agricultural field registrar 51a, the area definer 51b, the route creator 51c, the status detector 51d, the recorder 51e, and the notifier 51g. Additionally or alternatively, for example, one or more of the agricultural field registrar 51a, the area definer 51b, the route creator 51c, the status detector 51d, the recorder 51e, and the notifier 51g may be provided in the controller 60 of the agricultural machine 1 or be device(s) independent of the controller 51. The memory 53 may be provided in, for example, the controller 60 of the agricultural machine 1 or in an electronic device such as a personal computer (PC) on the agricultural machine 1 or the cloud instead of the agricultural assistance apparatus 50.

The input may be, instead of the display operation interface 52, a communication circuit and/or an input interface to receive input of, for example, registration information (which may include settings information) such as the agricultural field map MP2 (agricultural field), the agricultural machine 1, the working device 2, and/or the job setting(s) from a server or a storage medium storing such registration information. The input, the display, and the output may each be a communication circuit, an input interface, a display, a touch pad, key(s), and/or an output interface provided on the agricultural machine 1, instead of or in addition to the display operation interface 52 and the communicator 54 of the agricultural assistance apparatus 50.

The agricultural assistance apparatus 50 may be, instead of a portable tablet terminal, a smartphone or a terminal fixed to the agricultural machine 1, for example. The agricultural assistance apparatus may be an electronic device such as a PC which is not located on the agricultural machine 1, such as a server provided in the cloud, for example. The agricultural assistance system may include, instead of the agricultural assistance apparatus, application program(s) which can be acquired from the cloud and installed on an electronic device owned by a user, for example. In such a case, the agricultural field registrar 51a, the area definer 51b, the route creator 51c, the status detector 51d, the recorder 51e, and the notifier 51g may be the application program(s), and notification(s) from the notifier may be displayed on a display included in or connected to an electronic device on which the application program(s) is/are installed. Notification(s) from the notifier may be in the form of sound outputted from speaker(s) of the agricultural machine and/or the electronic device.

The agricultural assistance system 100, the agricultural machine 1, and the agricultural assistance apparatus 50 of preferred embodiments as discussed above include the following feature(s) and achieve the following effect(s).

An agricultural assistance system 100 according to one or more embodiments includes an input (display operation interface) 52 to receive input of size information of a working device 2 linked to an agricultural machine 1 and at least one job setting for an agricultural job to be performed on an agricultural field by the agricultural machine 1 and the working device 2, a route creator 51c to create a travel route L1 for the agricultural machine 1 on a map (agricultural field map) MP2 representative of the agricultural field based on the size information and the at least one job setting inputted via the input 52, a status detector 51d to detect a status of the agricultural job which has been performed by the working device 2 during travel of the agricultural machine 1 based on the travel route L1, a recorder 51e to, when the agricultural job based on the travel route L1 is interrupted, record interruption data 70 including the size information, the at least one job setting, and a result of detection by the status detector 51d which are associated with identification information of the working device 2, and a notifier 51g to, if the size information of the working device 2 is changed via the input 52 during interruption of the agricultural job based on the travel route L1, provide a first notification U2 when the agricultural job is to be resumed based on the interruption data 70, the first notification U2 including an indication that the size information has been changed.

An agricultural machine 1 according to one or more embodiments is an agricultural machine to be assisted by the agricultural assistance system 100 and to perform an agricultural job, the agricultural machine 1 including a traveling vehicle body 3 to travel, a connector 8g, 8h to link a working device 2 to the traveling vehicle body 3, an input 52 to receive input of size information of the working device 2 linked to the traveling vehicle body 3 and at least one job setting for an agricultural job to be performed on an agricultural field by the agricultural machine 1 and the working device 2, a route creator 51c to create a travel route L1 for the traveling vehicle body 3 on a map MP2 representative of the agricultural field based on the size information and the at least one job setting inputted via the input 52, a status detector 51d to detect a status of the agricultural job which has been performed by the working device 2 during travel of the traveling vehicle body 3 based on the travel route L1, a recorder 51e to, when the agricultural job based on the travel route L1 is interrupted, record, in a memory 53, interruption data 70 including the size information, the at least one job setting, and a result of detection by the status detector 51d which are associated with identification information of the working device 2, and a notifier 51g to, if the size information of the working device 2 is changed via the input 52 during interruption of the agricultural job based on the travel route L1, provide a first notification U2 when the agricultural job is to be resumed based on the interruption data 70, the first notification U2 including an indication that the size information has been changed.

An agricultural assistance apparatus 50 according to one or more embodiments is an agricultural assistance apparatus included in the agricultural assistance system 100, the agricultural assistance apparatus 50 including an input 52, a route creator 51c, a status detector 51d, a recorder 51e, and a notifier 51g which are described earlier.

The above-described configuration allows the user to recognize that the size information of the working device 2 was changed during the interruption of the agricultural job performed by the agricultural machine 1 and the working device 2 based on the travel route L1, when the agricultural job is about to be resumed. This makes it possible, for example, to eliminate or reduce the likelihood that the travel route of the agricultural machine differs from what is expected by the user at the time of resumption of the agricultural job or that the size information of the working device set by the system differs from the size of the actually used working device at the time of resumption of the agricultural job, and possible to improve convenience. Such an effect is advantageous when, for example, the agricultural job is resumed after long time from the update of the size information of the working device 2 during the interruption of the agricultural job or when the user who updated the size information of the working device 2 during the interruption of the agricultural job and the user who resumes the agricultural job are different persons.

The agricultural assistance system 100, the agricultural machine 1, and the agricultural assistance apparatus 50 according to one or more embodiments may further include a memory 53 to store the size information and the at least one job setting inputted via the input 52 such that the size information and the at least one job setting inputted via the input 52 are associated with the identification information of the working device 2. The recorder 51e may be configured or programmed to record the interruption data 70 in the memory 53 when the agricultural job based on the travel route L1 is interrupted, and receive another size information inputted via the input 52 during interruption of the agricultural job based on the travel route L1 and replace the size information included in the interruption data 70 with the received other size information to update the size information included in the interruption data 70, the interruption data 70 being one of one or more pieces of interruption data 70 stored in the memory 53 and being associated with the identification information of the working device 2 corresponding to the inputted other size information. The route creator 51c may be configured or programmed to, when the agricultural job is to be resumed based on the interruption data 70, create the travel route L1 again based on the updated size information and the at least one job setting included in the interruption data 70.

This allows the user to update the size information of the working device 2 included in the interruption data 70, during the interruption of the agricultural job performed by the agricultural machine 1 and the working device 2 based on the travel route L1. This also makes it possible to resume the agricultural job performed by the agricultural machine 1 and the working device 2 based on the travel route L1 in which the updated size information is reflected. This makes it possible to further improve convenience when the agricultural job performed by the agricultural machine 1 and the working device 2 is interrupted and then is resumed.

The agricultural assistance system 100 according to one or more embodiments may further include a display (display operation interface) 52 to, during interruption of one or more agricultural jobs based on one or more travel routes L1, display the one or more pieces of interruption data 70 recorded in the memory 53 to enable selection of a piece of interruption data 70 corresponding to a to-be-resumed agricultural job from the one or more pieces of interruption data 70 via the input 52. The notifier 51g may be configured or programmed to, if the piece of interruption data 70 selected via the input 52 from the one or more pieces of interruption data 70 displayed on the display 52 includes the updated size information updated by the recorder 51e, provide the first notification U2 before the to-be-resumed agricultural job is resumed based on the selected piece of interruption data 70, the first notification U2 including the indication that the size information has been updated and an indication that the travel route L1 based on which the to-be-resumed agricultural job is resumed is different from what it was when the to-be-resumed agricultural job was interrupted.

This allows a user to select a to-be-resumed agricultural job even when agricultural jobs based on different travel routes L1 performed by the agricultural machine 1 and the working device(s) 2 are interrupted. It is also possible to allow the user to visually recognize that the size information of the working device 2 was updated during the interruption of the to-be-resumed agricultural job based on a corresponding travel route L1 and that the travel route L1 is different from what it was when the to-be-resumed agricultural job was interrupted, because the display 52 displays, when the to-be-resumed agricultural job is resumed, the notification including an indication that the size information of the working device 2 was updated during the interruption of the to-be-resumed agricultural job based on the corresponding travel route L1 and an indication that the travel route L1 is different from what it was when the to-be-resumed agricultural job was interrupted.

In one or more embodiments, the recorder 51e may be configured or programmed to, when the recorder 51e is about to update the size information during the interruption of the agricultural job based on the travel route L1, record, in the memory 53, data-for-restoration including the size information which is pre-update size information and the identification information of the working device 2 associated with the pre-update size information. The notifier 51g may be configured or programmed to provide a second notification U3 when the agricultural job is to be resumed based on the interruption data 70 including the updated size information updated by the recorder 51e, the second notification U3 enabling selection, via the input 52, of the updated size information or the pre-update size information included in the data-for-restoration which is one of one or more pieces of data-for-restoration and is associated with the same identification information as that of the working device 2 associated with the updated size information. The route creator 51c may be configured or programmed to create the travel route L1 again based on the updated size information or the pre-update size information selected via the input 52.

This allows the user, even if the size information of the working device 2 is updated during the interruption of the agricultural job based on the travel route L1, to select, as a travel route L1 to be used in resuming the agricultural job, the travel route L1 in which the update is reflected or the travel route L1 at the time of the interruption in which the update is not reflected, making it possible to further improve convenience.

In one or more embodiments, the recorder 51e may be configured or programmed to record, in the memory 53, an update flag 77 such that the update flag 77 is included in the interruption data 70 and associated with the identification information of the working device 2 when the agricultural job based on the travel route L1 is interrupted, and turn ON the update flag 77 included in the interruption data 70 when the size information included in the interruption data 70 is updated during the interruption of the agricultural job based on the travel route L1. The notifier 51g may be configured or programmed to, if the update flag 77 included in the interruption data 70 is ON when the agricultural job is to be resumed based on the interruption data 70, provide the first notification U2 and/or the second notification U3. This allows, even if the size information of the working device 2 is updated during the interruption of the agricultural job based on the travel route L1, the user to visually recognize the content of the first notification U2 and/or the second notification U3 by causing the display operation interface 52 to reliably display the notification(s) U2 and/or U3 when the agricultural job is to be resumed.

In one or more embodiments, the recorder 51e may be configured or programmed to record, in the memory 53, date-and-time-of-interruption 79 such that the date-and-time-of-interruption 79 is included in the interruption data 70 and associated with the identification information of the working device 2 when the agricultural job based on the travel route L1 is interrupted, the date-and-time-of-interruption 79 being a date and time at which the agricultural job based on the travel route L1 was interrupted, and record, in the memory 53, date-and-time-of-update 78 such that the date-and-time-of-update 78 is included in the interruption data 70 and associated with the identification information of the working device 2 when the size information is updated, the date-and-time-of-update 78 being a date and time at which the size information was updated (FIG. 19). The notifier 51g may be configured or programmed to, if the date-and-time-of-update 78 included in the interruption data 70 is later than the date-and-time-of-interruption 79 included in the interruption data 70, provide the first notification U2 and/or the second notification U3 when the agricultural job is to be resumed based on the interruption data 70 including the date-and-time-of-update 78. This allows, even if the size information of the working device 2 is updated during the interruption of the agricultural job based on the travel route L1, the user to visually recognize the content of the first notification U2 and/or the second notification U3 by causing the display operation interface 52 to reliably display the notification(s) U2 and/or U3 when the agricultural job is to be resumed.

In one or more embodiments, the recorder 51e may be configured or programmed to, upon completion of the agricultural job resumed based on the interruption data 70, replace, with the updated size information included in the interruption data 70, the size information which is one of one or more pieces of size information stored in the memory 53 and is associated with the same identification information as that of the working device 2 associated with the updated size information included in the interruption data 70. This makes it possible to replace the size information of the working device 2 stored in the memory 53 with the size information of the working device 2 received during the interruption of the agricultural job based on the travel route L1, making it possible thereafter to make settings such as creating a travel route L1 using the size information of the working device 2 stored in the memory 53.

The agricultural assistance system 100 according to one or more embodiments may further include a display (display operation interface) 52 to display content inputted via the input 52, the map MP2, the travel route L1, and content of the first notification U2 and/or the second notification U3 provided by the notifier 51g. This allows the user to visually recognize the content inputted via the input 52, the map MP2, the travel route L1, and the content of the notification(s) U2 and/or U3 provided by the notifier 51g, making it possible to further improve convenience.

The agricultural assistance system 100 according to one or more embodiments may further include a position detector (positioning device) 40 to detect a position of the agricultural machine 1, an output (communicator) 54 to output the travel route L1 created by the route creator 51c, and an automatic operation controller 61 to control, based on the position of the agricultural machine 1 and the travel route L1, the agricultural machine 1 to travel automatically and/or to be steered automatically and control the working device 2 to be driven to perform the agricultural job on the agricultural field. The automatic operation controller 61 may be configured or programmed to, when the agricultural job based on the travel route L1 having been interrupted is resumed, control the agricultural machine 1 to travel automatically and/or to be steered automatically and control the working device 2 to be driven based on the position of the agricultural machine 1 detected by the position detector 40, the travel route L1 outputted via the output 54, and the interruption data 70 that was recorded in the memory 53 when the agricultural job was interrupted.

This makes it possible to perform the agricultural job with the working device 2 while causing the agricultural machine 1 to travel automatically and/or to be steered automatically based on the travel route L1, and possible to update the size information of the working device 2 during the interruption of the agricultural job. It is also possible, when resuming the agricultural job, to perform the agricultural job with the working device 2 while causing the agricultural machine 1 to travel automatically and/or to be steered automatically based on the travel route L1 in which the update of the size information of the working device 2 is reflected, thus making it possible to improve convenience.

The agricultural machine 1 according to one or more embodiments may further include a display (display operation interface) 52 to display content inputted via the input 52, the map MP2, the travel route L1, and content of the first notification U2 provided by the notifier 51g, a position detector 40 to detect a position of the traveling vehicle body 3, and an automatic operation controller 61 to control, based on the position of the agricultural machine 1 and the travel route L1, the agricultural machine 1 to travel automatically and/or to be steered automatically and control the working device 2 to be driven to perform the agricultural job on the agricultural field. The display 52 may be operable to, during interruption of one or more agricultural jobs based on one or more travel routes L1, display the one or more pieces of interruption data 70 recorded in the memory 53 to enable selection of a piece of interruption data 70 corresponding to a to-be-resumed agricultural job from the one or more pieces of interruption data 70 via the input 52. The automatic operation controller 61 may be configured or programmed to, when the to-be-resumed agricultural job which is the agricultural job based on the travel route L1 having been interrupted is resumed, control the traveling vehicle body 3 to travel automatically and/or to be steered automatically and control the working device 2 to be driven based on the position of the traveling vehicle body 3 detected by the position detector 40, the travel route L1 created again by the route creator 51c, and the interruption data 70 recorded in the memory 53.

With this, in an agricultural job in which the traveling vehicle body 3 of the agricultural machine 1 automatically travels and/or is automatically steered based on the travel route L1 while the working device 2 is driven automatically, the user can update the size information of the working device 2 during the interruption of the agricultural job and resume the agricultural job based on the travel route L1 in which the update is reflected. Even if agricultural jobs based on different travel routes L1 are interrupted, the user can select a to-be-resumed agricultural job. It is also possible, when the agricultural job is to be resumed, to allow the user to visually recognize that the size information of the working device 2 was updated during the interruption of the agricultural job and therefore the travel route L1 based on which the agricultural job is resumed is different from what it was when the agricultural job was interrupted.

The agricultural assistance apparatus 50 according one or more embodiments may further include a display (display operation interface) 52 to display content inputted via the input (display operation interface) 52, the map MP2, the travel route L1, and content of the first notification U2 provided by the notifier 51g, and an output (communicator) 54 to output the travel route L1 created by the route creator 51c to the agricultural machine 1. The display 52 may be operable to, during interruption of one or more agricultural jobs based on one or more travel routes L1, display the one or more pieces of interruption data 70 recorded in the memory 53 to enable selection of a piece of interruption data 70 corresponding to a to-be-resumed agricultural job from the one or more pieces of interruption data 70 via the input 52. This allows, even if agricultural jobs based on different travel routes L1 are interrupted, the user to select a to-be-resumed agricultural job.

## Claims

1. An agricultural assistance system (100) comprising:
an input (52) to receive input of
size information of a working device (2) linked to an agricultural machine (1) and
at least one job setting for an agricultural job to be performed on an agricultural field by the agricultural machine (1) and the working device (2);
a route creator (51c) configured or programmed to create a travel route (L1) for the agricultural machine (1) on a map (MP2) representative of the agricultural field based on the size information and the at least one job setting inputted via the input (52); and
a status detector (51d) configured or programmed to detect a status of the agricultural job which has been performed by the working device (2) during travel of the agricultural machine (1) based on the travel route (L1); **characterized by** comprising:
a recorder (51e) configured or programmed to, when the agricultural job based on the travel route (L1) is interrupted, record interruption data (70) including the size information, the at least one job setting, and a result of detection by the status detector (51d) which are associated with identification information of the working device (2); and
a notifier (51g) configured or programmed to, if the size information of the working device (2) is changed via the input (52) during interruption of the agricultural job based on the travel route (L1), provide a first notification (U2) when the agricultural job is to be resumed later based on the interruption data (70), the first notification (U2) including an indication that the size information has been changed.

2. The agricultural assistance system (100) according to claim 1, further comprising:
a memory (53) to store the size information and the at least one job setting inputted via the input (52) such that the size information and the at least one job setting inputted via the input (52) are associated with the identification information of the working device (2), wherein
the recorder (51e) is configured or programmed to
record the interruption data (70) in the memory (53) when the agricultural job based on the travel route (L1) is interrupted, and
receive another size information inputted via the input (52) during interruption of the agricultural job based on the travel route (L1) and replace the size information included in the interruption data (70) with the received other size information to update the size information included in the interruption data (70), the interruption data (70) being one of one or more pieces of interruption data (70) stored in the memory (53) and being associated with the identification information of the working device (2) corresponding to the inputted other size information, and
the route creator (51c) is configured or programmed to, when the agricultural job is to be resumed based on the interruption data (70), create the travel route (L1) again based on the updated size information and the at least one job setting included in the interruption data (70).

3. The agricultural assistance system (100) according to claim 2, further comprising:
a display (52) to, during interruption of one or more agricultural jobs based on one or more travel routes (L1), display the one or more pieces of interruption data (70) recorded in the memory (53) to enable selection of a piece of interruption data (70) corresponding to a to-be-resumed agricultural job from the one or more pieces of interruption data (70) via the input (52), wherein
the notifier (51g) is configured or programmed to, if the piece of interruption data (70) selected via the input (52) from the one or more pieces of interruption data (70) displayed on the display (52) includes the updated size information updated by the recorder (51e), provide the first notification (U2) before the to-be-resumed agricultural job is resumed based on the selected piece of interruption data (70), the first notification (U2) including the indication that the size information has been updated and an indication that the travel route (L1) based on which the to-be-resumed agricultural job is resumed is different from what it was when the to-be-resumed agricultural job was interrupted.

4. The agricultural assistance system (100) according to claim 2 or 3, wherein
the recorder (51e) is configured or programmed to, when the recorder (51e) is about to update the size information during the interruption of the agricultural job based on the travel route (L1), record, in the memory (53), data-for-restoration including the size information which is pre-update size information and the identification information of the working device (2) associated with the pre-update size information,
the notifier (51g) is configured or programmed to provide a second notification (U3) when the agricultural job is to be resumed based on the interruption data (70) including the updated size information updated by the recorder (51e), the second notification (U3) enabling selection, via the input (52), of the updated size information or the pre-update size information included in the data-for-restoration which is one of one or more pieces of data-for-restoration and is associated with the same identification information as that of the working device (2) associated with the updated size information, and
the route creator (51c) is configured or programmed to create the travel route (L1) again based on the updated size information or the pre-update size information selected via the input (52).

5. The agricultural assistance system (100) according to any one of claims 2 to 4, wherein
the recorder (51e) is configured or programmed to
record, in the memory (53), an update flag (77) such that the update flag (77) is included in the interruption data (70) and associated with the identification information of the working device (2) when the agricultural job based on the travel route (L1) is interrupted, and
turn ON the update flag (77) included in the interruption data (70) when the size information included in the interruption data (70) is updated during the interruption of the agricultural job based on the travel route (L1), and
the notifier (51g) is configured or programmed to, if the update flag (77) included in the interruption data (70) is ON when the agricultural job is to be resumed based on the interruption data (70), provide the first notification (U2) and/or the second notification (U3).

6. The agricultural assistance system (100) according to any one of claims 2 to 4, wherein
the recorder (51e) is configured or programmed to
record, in the memory (53), date-and-time-of-interruption (79) such that the date-and-time-of-interruption (79) is included in the interruption data (70) and associated with the identification information of the working device (2) when the agricultural job based on the travel route (L1) is interrupted, the date-and-time-of-interruption (79) being a date and time at which the agricultural job based on the travel route (L1) was interrupted, and
record, in the memory (53), date-and-time-of-update (78) such that the date-and-time-of-update (78) is included in the interruption data (70) and associated with the identification information of the working device (2) when the size information is updated, the date-and-time-of-update (78) being a date and time at which the size information was updated, and
the notifier (51g) is configured or programmed to, if the date-and-time-of-update (78) included in the interruption data (70) is later than the date-and-time-of-interruption (79) included in the interruption data (70), provide the first notification (U2) and/or the second notification (U3) when the agricultural job is to be resumed based on the interruption data (70) including the date-and-time-of-update (78).

7. The agricultural assistance system (100) according to any one of claims 2 to 4, wherein the recorder (51e) is configured or programmed to, upon completion of the agricultural job resumed based on the interruption data (70), replace, with the updated size information included in the interruption data (70), the size information which is one of one or more pieces of size information stored in the memory (53) and is associated with the same identification information as that of the working device (2) associated with the updated size information included in the interruption data (70).

8. The agricultural assistance system (100) according to any one of claims 2 to 7, further comprising:
a display (52) to display content inputted via the input (52), the map (MP2), the travel route (L1), and content of the first notification (U2) and/or the second notification (U3) provided by the notifier (51g).

9. The agricultural assistance system (100) according to any one of claims 1 to 8, further comprising:
a position detector (40) to detect a position of the agricultural machine (1);
an output (54) to output the travel route (L1) created by the route creator (51c),
and
an automatic operation controller (61) to control, based on the position of the agricultural machine (1) and the travel route (L1), the agricultural machine (1) to travel automatically and/or to be steered automatically and control the working device (2) to be driven to perform the agricultural job on the agricultural field, wherein
the automatic operation controller (61) is configured or programmed to, when the agricultural job based on the travel route (L1) having been interrupted is resumed, control the agricultural machine (1) to travel automatically and/or to be steered automatically and control the working device (2) to be driven based on the position of the agricultural machine (1) detected by the position detector (40), the travel route (L1) outputted via the output (54), and the interruption data (70) that was recorded in the memory (53) when the agricultural job was interrupted.

10. The agricultural assistance system (100) according to any one of claims 1 to 9, further comprising:
the agricultural machine (1), wherein
the agricultural machine (1) includes the input (52), the route creator (51c), the status detector (51d), the recorder (51e), and the notifier (51g).

11. The agricultural assistance system (100) according to claim 10, wherein the agricultural machine (1) includes a memory (53), a display (52), a position detector (40) to detect a position of the agricultural machine (1), and an automatic operation controller (61) to control, based on the position of the agricultural machine (1) and the travel route (L1), the agricultural machine (1) to travel automatically and/or to be steered automatically and control the working device (2) to be driven to perform the agricultural job on the agricultural field.

12. The agricultural assistance system (100) according to any one of claims 1 to 9, further comprising an agricultural assistance apparatus (50) to be provided in or on the agricultural machine (1), wherein
the agricultural assistance apparatus (50) includes the input (52), the route creator (51c), the status detector (51d), the recorder (51e), and the notifier (51g).

13. The agricultural assistance system (100) according to claim 12, wherein the agricultural assistance apparatus (50) includes a memory (53), a display (52), and an output (54) to output the travel route (L1) created by the route creator (51c) to the agricultural machine (1).

## Patentansprüche

1. Landwirtschaftliches Assistenzsystem (100), umfassend:
eine Eingabe (52) zum Empfangen von
Größeninformationen einer Arbeitsvorrichtung (2), die mit einer Landwirtschaftsmaschine (1) verbunden ist, und
mindestens eine Aufgabeneinstellung für eine landwirtschaftliche Aufgabe, die durch die Landwirtschaftsmaschine (1) und die Arbeitsvorrichtung (2) auf einem landwirtschaftlichen Feld durchzuführen ist;
einen Routenersteller (51c), der konfiguriert oder programmiert ist, um basierend auf den Größeninformationen und der mindestens einen über die Eingabe (52) eingegebenen Aufgabeneinstellung eine Fahrtroute (L1) für die Landwirtschaftsmaschine (1) auf einer Karte (MP2) zu erstellen, die das landwirtschaftliche Feld darstellt; und
einen Statusdetektor (51d), der konfiguriert oder programmiert ist, um einen Status der landwirtschaftlichen Aufgabe zu erkennen, die durch die Arbeitsvorrichtung (2) während der Fahrt der Landwirtschaftsmaschine (1) durchgeführt worden ist, basierend auf der Fahrtroute (L1);
**gekennzeichnet dadurch, dass** er umfasst:
eine Aufzeichnungseinrichtung (51e), die konfiguriert oder programmiert ist, um, wenn die landwirtschaftliche Aufgabe basierend auf der Fahrtroute (L1) unterbrochen wird, Unterbrechungsdaten (70) aufzuzeichnen, die die Größeninformationen, die mindestens eine Aufgabeneinstellung und ein Ergebnis der Erkennung durch den Statusdetektor (51d) einschließen, die mit Identifikationsinformationen der Arbeitsvorrichtung (2) verknüpft sind; und
eine Benachrichtigungseinrichtung (51g), die konfiguriert oder programmiert ist, um, falls die Größeninformationen der Arbeitsvorrichtung (2) über die Eingabe (52) während der Unterbrechung der landwirtschaftlichen Aufgabe basierend auf der Fahrtroute (L1) geändert werden, eine erste Benachrichtigung (U2) bereitzustellen, wenn die landwirtschaftliche Aufgabe basierend auf den Unterbrechungsdaten (70) später wieder aufzunehmen ist, wobei die erste Benachrichtigung (U2) einen Hinweis darauf einschließt, dass die Größeninformationen geändert worden sind.

2. Landwirtschaftliches Assistenzsystem (100) nach Anspruch 1, ferner umfassend:
einen Speicher (53), um die Größeninformationen und die mindestens eine über die Eingabe (52) eingegebene Aufgabeneinstellung derart zu speichern, dass die Größeninformationen und die mindestens eine über die Eingabe (52) eingegebene Aufgabeneinstellung mit den Identifikationsinformationen der Arbeitsvorrichtung (2) verknüpft werden, wobei
die Aufzeichnungseinrichtung (51e) konfiguriert oder programmiert ist zum
Aufzeichnen der Unterbrechungsdaten (70) in dem Speicher (53), wenn die landwirtschaftliche Aufgabe basierend auf der Fahrtroute (L1) unterbrochen wird, und
Empfangen von anderen während der Unterbrechung der landwirtschaftlichen Aufgabe basierend auf der Fahrtroute (L1) über die Eingabe (52) eingegebenen Größeninformationen und Ersetzen der in den Unterbrechungsdaten (70) eingeschlossenen Größeninformationen durch die empfangenen anderen Größeninformationen, um die in den Unterbrechungsdaten (70) eingeschlossenen Größeninformationen zu aktualisieren, wobei die Unterbrechungsdaten (70) eines von einem oder mehreren Elementen von in dem Speicher (53) gespeicherten Unterbrechungsdaten (70) sind und mit den Identifikationsinformationen der Arbeitsvorrichtung (2) verknüpft sind, die den eingegebenen anderen Größeninformationen entsprechen, und
der Routenersteller (51c) konfiguriert oder programmiert ist, um, wenn die landwirtschaftliche Aufgabe basierend auf den Unterbrechungsdaten (70) wieder aufzunehmen ist, die Fahrtroute (L1) erneut basierend auf den aktualisierten Größeninformationen und der mindestens einen Aufgabeneinstellung, die in den Unterbrechungsdaten (70) eingeschlossen sind, zu erstellen.

3. Landwirtschaftliches Assistenzsystem (100) nach Anspruch 2, ferner umfassend:
eine Anzeige (52), um während der Unterbrechung einer oder mehrerer landwirtschaftlicher Aufgaben basierend auf einer oder mehreren Fahrtrouten (L1) das eine oder die mehreren Elemente von in dem Speicher (53) aufgezeichneten Unterbrechungsdaten (70) anzuzeigen, um über die Eingabe (52) eine Auswahl eines Elements von Unterbrechungsdaten (70), das einer wiederaufzunehmenden landwirtschaftlichen Aufgabe entspricht, von dem einen oder den mehreren Elementen von Unterbrechungsdaten (70) zu ermöglichen, wobei
die Benachrichtigungseinrichtung (51g) konfiguriert oder programmiert ist, um, falls das über die Eingabe (52) von dem einen oder den mehreren Elementen von Unterbrechungsdaten (70), die auf der Anzeige (52) angezeigt werden, ausgewählte Element von Unterbrechungsdaten (70) die durch die Aufzeichnungseinrichtung (51e) aktualisierten Größeninformationen einschließt, die erste Benachrichtigung (U2) bereitzustellen, bevor die wiederaufzunehmende landwirtschaftliche Aufgabe basierend auf dem ausgewählten Element von Unterbrechungsdaten (70) wiederaufgenommen wird, wobei die erste Benachrichtigung (U2) den Hinweis, dass die Größeninformationen aktualisiert worden sind, und einen Hinweis einschließt, dass die Fahrtroute (L1), auf der basierend die wiederaufzunehmende landwirtschaftliche Aufgabe wiederaufgenommen wird, sich davon unterscheidet, wie sie war, als die wiederaufzunehmende landwirtschaftliche Aufgabe unterbrochen wurde.

4. Landwirtschaftliches Assistenzsystem (100) nach Anspruch 2 oder 3, wobei die Aufzeichnungseinrichtung (51e) konfiguriert oder programmiert ist, um, wenn die Aufzeichnungseinrichtung (51e) im Begriff ist, die Größeninformationen während der Unterbrechung der landwirtschaftlichen Aufgabe basierend auf der Fahrtroute (L1) zu aktualisieren, in dem Speicher (53) Daten für eine Wiederherstellung aufzuzeichnen, die die Größeninformationen, bei denen es sich um Größeninformationen vor der Aktualisierung handelt, und die Identifikationsinformationen der Arbeitsvorrichtung (2), die mit den Größeninformationen vor der Aktualisierung verknüpft sind, einschließen,
wobei die Benachrichtigungseinrichtung (51g) konfiguriert oder programmiert ist, um eine zweite Benachrichtigung (U3) bereitzustellen, wenn die landwirtschaftliche Aufgabe basierend auf den Unterbrechungsdaten (70), die die durch die Aufzeichnungseinrichtung (51e) aktualisierten Größeninformationen einschließen, wiederaufzunehmen ist, wobei die zweite Benachrichtigung (U3) über die Eingabe (52) die Auswahl der aktualisierten Größeninformationen oder der Größeninformationen vor der Aktualisierung ermöglicht, die in den Daten für eine Wiederherstellung eingeschlossen sind, bei denen es sich um eins von einem oder mehreren Elementen der Daten für eine Wiederherstellung handelt und die mit denselben Identifikationsinformationen wie die der Arbeitsvorrichtung (2) verknüpft sind, die mit den aktualisierten Größeninformationen verknüpft ist, und
wobei der Routenersteller (51c) konfiguriert oder programmiert ist, um die Fahrtroute (L1) basierend auf den aktualisierten Größeninformationen oder den über die Eingabe (52) ausgewählten Größeninformationen vor der Aktualisierung erneut zu erstellen.

5. Landwirtschaftliches Assistenzsystem (100) nach einem der Ansprüche 2 bis 4, wobei
die Aufzeichnungseinrichtung (51e) konfiguriert oder programmiert ist zum
Aufzeichnen eines Aktualisierungsflags (77) in dem Speicher (53) derart, dass das Aktualisierungsflag (77) in die Unterbrechungsdaten (70) eingeschlossen und mit den Identifikationsinformationen der Arbeitsvorrichtung (2) verknüpft wird, wenn die landwirtschaftliche Aufgabe basierend auf der Fahrtroute (L1) unterbrochen wird, und
das in den Unterbrechungsdaten (70) eingeschlossene Aktualisierungsflag (77) auf EIN zu schalten, wenn die in den Unterbrechungsdaten (70) eingeschlossenen Größeninformationen während der Unterbrechung der landwirtschaftlichen Aufgabe basierend auf der Fahrtroute (L1) aktualisiert werden, und
die Benachrichtigungseinrichtung (51g) konfiguriert oder programmiert ist, um, falls das in den Unterbrechungsdaten (70) eingeschlossene Aktualisierungsflag (77) auf EIN geschaltet ist, wenn die landwirtschaftliche Aufgabe basierend auf den Unterbrechungsdaten (70) wiederaufzunehmen ist, die erste Benachrichtigung (U2) und/oder die zweite Benachrichtigung (U3) bereitzustellen.

6. Landwirtschaftliches Assistenzsystem (100) nach einem der Ansprüche 2 bis 4, wobei
die Aufzeichnungseinrichtung (51e) konfiguriert oder programmiert ist zum
Aufzeichnen eines Datums und einer Uhrzeit der Unterbrechung (79) in dem Speicher (53) derart, dass das Datum und die Uhrzeit der Unterbrechung (79) in den Unterbrechungsdaten (70) eingeschlossen sind und mit den Identifikationsinformationen der Arbeitsvorrichtung (2) verknüpft sind, wenn die landwirtschaftliche Aufgabe basierend auf der Fahrtroute (L1) unterbrochen wird, wobei das Datum und die Uhrzeit der Unterbrechung (79) ein Datum und eine Uhrzeit sind, zu der die landwirtschaftliche Aufgabe basierend auf der Fahrtroute (L1) unterbrochen wurde, und
Aufzeichnen eines Datums und einer Uhrzeit der Aktualisierung (78) in dem Speicher (53) derart, dass das Datum und die Uhrzeit der Aktualisierung (78) in den Unterbrechungsdaten (70) eingeschlossen sind und mit den Identifikationsinformationen der Arbeitsvorrichtung (2) verknüpft sind, wenn die Größeninformationen aktualisiert werden, wobei das Datum und die Uhrzeit der Aktualisierung (78) ein Datum und eine Uhrzeit sind, zu dem/der die Größeninformationen aktualisiert wurden, und
die Benachrichtigungseinrichtung (51g) konfiguriert oder programmiert ist, um, falls das Datum und die Uhrzeit der Aktualisierung (78), die in den Unterbrechungsdaten (70) eingeschlossen sind, später als das Datum und die Uhrzeit der Unterbrechung (79), die in den Unterbrechungsdaten (70) eingeschlossen sind, die erste Benachrichtigung (U2) und/oder die zweite Benachrichtigung (U3) bereitzustellen, wenn die landwirtschaftliche Aufgabe basierend auf den Unterbrechungsdaten (70), die das Datum und die Uhrzeit der Aktualisierung (78) einschließen, wiederaufzunehmen ist.

7. Landwirtschaftliches Assistenzsystem (100) nach einem der Ansprüche 2 bis 4, wobei die Aufzeichnungseinrichtung (51e) konfiguriert oder programmiert ist, um bei Abschluss der wiederaufgenommenen landwirtschaftlichen Aufgabe basierend auf den Unterbrechungsdaten (70) die Größeninformationen, bei denen es sich um eins von einem oder mehreren Elementen von in dem Speicher (53) gespeicherten Größeninformationen handelt und mit denselben Identifikationsinformationen wie die der Arbeitsvorrichtung (2), die mit den aktualisierten Größeninformationen in den Unterbrechungsdaten (70) verknüpft ist, durch die in den Unterbrechungsdaten (70) eingeschlossenen aktualisierten Größeninformationen zu ersetzen.

8. Landwirtschaftliches Assistenzsystem (100) nach einem der Ansprüche 2 bis 7, ferner umfassend:
eine Anzeige (52), um einen über die Eingabe (52) eingegebenen Inhalt, die Karte (MP2), die Fahrtroute (L1) und den Inhalt der ersten Benachrichtigung (U2) und/oder der zweiten Benachrichtigung (U3), die durch die Benachrichtigungseinrichtung (51g) bereitgestellt wird, anzuzeigen.

9. Landwirtschaftliches Assistenzsystem (100) nach einem der Ansprüche 1 bis 8, ferner umfassend:
einen Positionsdetektor (40), um eine Position der Landwirtschaftsmaschine (1) zu erkennen,
eine Ausgabe (54), um die durch den Routenersteller (51c) erstellte Fahrtroute (L1) auszugeben, und
eine automatische Betriebssteuerung (61), um basierend auf der Position der Landwirtschaftsmaschine (1) und der Fahrtroute (L1) zu steuern, dass die Landwirtschaftsmaschine (1) automatisch fährt und/oder automatisch gelenkt wird, und steuern, dass die Arbeitsvorrichtung (2) angetrieben wird, um die landwirtschaftliche Aufgabe auf dem landwirtschaftlichen Feld durchzuführen, wobei
die automatische Betriebssteuerung (61) konfiguriert oder programmiert ist, um, wenn die landwirtschaftliche Aufgabe basierend darauf, dass die Fahrtroute (L1) unterbrochen wurde, wiederaufgenommen wird, zu steuern, dass die Landwirtschaftsmaschine (1) automatisch fährt und/oder gelenkt wird, und steuern, dass die Arbeitsvorrichtung (2) basierend auf der durch den Positionsdetektor (40) erkannten Position der Landwirtschaftsmaschine (1), der über die Ausgabe (54) ausgegebenen Fahrtroute (L1) und der Unterbrechungsdaten (70), die in dem Speicher (53) gespeichert wurden, als die landwirtschaftliche Aufgabe unterbrochen wurde, angetrieben wird.

10. Landwirtschaftliches Assistenzsystem (100) nach einem der Ansprüche 1 bis 9, ferner umfassend:
die Landwirtschaftsmaschine (1), wobei
die Landwirtschaftsmaschine (1) die Eingabe (52), den Routenersteller (51c), den Statusdetektor (51d), die Aufzeichnungseinrichtung (51e) und die Benachrichtigungseinrichtung (51g) einschließt.

11. Landwirtschaftliches Assistenzsystem (100) nach Anspruch 10, wobei die Landwirtschaftsmaschine (1) einen Speicher (53), eine Anzeige (52), einen Positionsdetektor (40), um eine Position der Landwirtschaftsmaschine (1) zu erkennen, und eine automatische Betriebssteuerung (61) umfasst, um basierend auf der Position der Landwirtschaftsmaschine (1) und der Fahrtroute (L1) zu steuern, dass die Landwirtschaftsmaschine (1) automatisch fährt und/oder gelenkt wird, und steuern, dass die Arbeitsvorrichtung (2) angetrieben wird, um die landwirtschaftliche Aufgabe auf dem landwirtschaftlichen Feld durchzuführen.

12. Landwirtschaftliches Assistenzsystem (100) nach einem der Ansprüche 1 bis 9, ferner umfassend eine landwirtschaftliche Assistenzausrüstung (50), die in oder an der Landwirtschaftsmaschine (1) bereitgestellt ist, wobei
die landwirtschaftliche Assistenzausrüstung (50) die Eingabe (52), den Routenersteller (51c), den Statusdetektor (51d), die Aufzeichnungseinrichtung (51e) und die Benachrichtigungseinrichtung (51g) einschließt.

13. Landwirtschaftliches Assistenzsystem (100) nach Anspruch 12, wobei die landwirtschaftliche Assistenzausrüstung (50) einen Speicher (53), eine Anzeige (52) und eine Ausgabe (54) einschließt, um die durch den Routenersteller (51c) erstellte Fahrtroute (L1) an die Landwirtschaftsmaschine (1) auszugeben.

## Revendications

1. Système d'assistance agricole (100) comprenant :
une entrée (52) pour recevoir une entrée
d'informations de taille d'un dispositif de travail (2) lié à une machine agricole (1) et
au moins un paramètre de tâche pour une tâche agricole à réaliser sur un champ agricole par la machine agricole (1) et le dispositif de travail (2) ;
un dispositif de création d'itinéraire (51c) configuré ou programmé pour créer un itinéraire de déplacement (L1) pour la machine agricole (1) sur une carte (MP2) représentative du champ agricole sur la base des informations de taille et de l'au moins un paramètre de tâche entré par l'intermédiaire de l'entrée (52) ; et
un détecteur d'état (51d) configuré ou programmé pour détecter un état de la tâche agricole qui a été réalisée par le dispositif de travail (2) pendant un déplacement de la machine agricole (1) sur la base de l'itinéraire de déplacement (L1) ; **caractérisé par le fait qu'**il comprend :
un dispositif d'enregistrement (51e) configuré ou programmé pour, lorsque la tâche agricole basée sur l'itinéraire de déplacement (L1) est interrompue, enregistrer des données d'interruption (70) comportant les informations de taille, l'au moins un paramètre de tâche et un résultat de détection par le détecteur d'état (51d) qui sont associés à des informations d'identification du dispositif de travail (2) ; et
un dispositif de notification (51g) configuré ou programmé pour, si les informations de taille du dispositif de travail (2) sont modifiées par l'intermédiaire de l'entrée (52) pendant une interruption de la tâche agricole basée sur l'itinéraire de déplacement (L1), fournir une première notification (U2) lorsque la tâche agricole doit être reprise ultérieurement sur la base des données d'interruption (70), la première notification (U2) comportant une indication selon laquelle les informations de taille ont été modifiées.

2. Système d'assistance agricole (100) selon la revendication 1, comprenant en outre :
une mémoire (53) pour stocker les informations de taille et l'au moins un paramètre de tâche entré par l'intermédiaire de l'entrée (52) de telle sorte que les informations de taille et l'au moins un paramètre de tâche entré par l'intermédiaire de l'entrée (52) sont associés aux informations d'identification du dispositif de travail (2), dans lequel
le dispositif d'enregistrement (51e) est configuré ou programmé pour
enregistrer les données d'interruption (70) dans la mémoire (53) lorsque la tâche agricole basée sur l'itinéraire de déplacement (L1) est interrompue, et
recevoir d'autres informations de taille entrées par l'intermédiaire de l'entrée (52) pendant une interruption de la tâche agricole basée sur l'itinéraire de déplacement (L1) et remplacer les informations de taille incluses dans les données d'interruption (70) par les autres informations de taille reçue pour mettre à jour les informations de taille incluses dans les données d'interruption (70), les données d'interruption (70) étant un d'un ou plusieurs parmi des éléments de données d'interruption (70) stockées dans la mémoire (53) et étant associées aux informations d'identification du dispositif de travail (2) correspondant aux autres informations de taille entrées, et
le dispositif de création d'itinéraire (51c) est configuré ou programmé pour, lorsque la tâche agricole doit être reprise sur la base des données d'interruption (70), créer à nouveau l'itinéraire de déplacement (L1) sur la base des informations de taille mises à jour et de l'au moins un paramètre de tâche inclus dans les données d'interruption (70).

3. Système d'assistance agricole (100) selon la revendication 2, comprenant en outre :
une unité d'affichage (52) pour, pendant une interruption d'une ou de plusieurs tâches agricoles basées sur un ou plusieurs itinéraires de déplacement (L1), afficher le ou les éléments de données d'interruption (70) enregistrées dans la mémoire (53) afin de permettre une sélection d'un élément de données d'interruption (70) correspondant à une tâche agricole à reprendre parmi le ou les éléments de données d'interruption (70) par l'intermédiaire de l'entrée (52), dans lequel
le dispositif de notification (51g) est configuré ou programmé pour, si l'élément de données d'interruption (70) sélectionné par l'intermédiaire de l'entrée (52) parmi le ou les éléments de données d'interruption (70) affichés sur l'unité d'affichage (52) comporte les informations de taille mises à jour par le dispositif d'enregistrement (51e), fournir la première notification (U2) avant que la tâche agricole à reprendre ne soit reprise sur la base de l'élément de données d'interruption sélectionné (70), la première notification (U2) comportant l'indication selon laquelle les informations de taille ont été mises à jour et une indication selon laquelle l'itinéraire de déplacement (L1) sur la base duquel la tâche agricole à reprendre est reprise est différente de ce qu'elle était lorsque la tâche agricole à reprendre a été interrompue.

4. Système d'assistance agricole (100) la revendication 2 ou 3, dans lequel le dispositif d'enregistrement (51e) est configuré ou programmé pour, lorsque le dispositif d'enregistrement (51e) est sur le point de mettre à jour les informations de taille pendant l'interruption de la tâche agricole basée sur l'itinéraire de déplacement (L1), enregistrer, dans la mémoire (53), des données à restaurer comportant les informations de taille qui sont des informations de taille pré-mise à jour et les informations d'identification du dispositif de travail (2) associées aux informations de taille pré-mise à jour,
le dispositif de notification (51g) est configuré ou programmé pour fournir une seconde notification (U3) lorsque la tâche agricole doit être reprise sur la base des données d'interruption (70) comportant les informations de taille mises à jour mises à jour par le dispositif d'enregistrement (51e), la seconde notification (U3) permettant une sélection, par l'intermédiaire de l'entrée (52), des informations de taille mises à jour ou des informations de taille pré-mise à jour incluses dans les données à restaurer qui sont un d'un ou plusieurs éléments parmi des données à restaurer et qui sont associées aux mêmes informations d'identification que celles du dispositif de travail (2) associées aux informations de taille mises à jour, et
le dispositif de création d'itinéraire (51c) est configuré ou programmé pour créer à nouveau l'itinéraire de déplacement (L1) sur la base des informations de taille mises à jour ou des informations de taille pré-mise à jour sélectionnées par l'intermédiaire de l'entrée (52).

5. Système d'assistance agricole (100) selon l'une quelconque des revendications 2 à 4, dans lequel
le dispositif d'enregistrement (51e) est configuré ou programmé pour
enregistrer, dans la mémoire (53), un indicateur de mise à jour (77) de telle sorte que l'indicateur de mise à jour (77) est inclus dans les données d'interruption (70) et associé aux informations d'identification du dispositif de travail (2) lorsque la tâche agricole basée sur l'itinéraire de déplacement (L1) est interrompue, et
activer l'indicateur de mise à jour (77) inclus dans les données d'interruption (70) lorsque les informations de taille incluses dans les données d'interruption (70) sont mises à jour pendant l'interruption de la tâche agricole basée sur l'itinéraire de déplacement (L1), et
le dispositif de notification (51g) est configuré ou programmé pour, si l'indicateur de mise à jour (77) inclus dans les données d'interruption (70) est activé lorsque la tâche agricole doit être reprise sur la base des données d'interruption (70), fournir la première notification (U2) et/ou la seconde notification (U3).

6. Système d'assistance agricole (100) selon l'une quelconque des revendications 2 à 4, dans lequel
le dispositif d'enregistrement (51e) est configuré ou programmé pour
enregistrer, dans la mémoire (53), une date et une heure d'interruption (79) de telle sorte que la date et l'heure d'interruption (79) sont incluses dans les données d'interruption (70) et associées aux informations d'identification du dispositif de travail (2) lorsque la tâche agricole basée sur l'itinéraire de déplacement (L1) est interrompue, la date et l'heure d'interruption (79) étant une date et une heure auxquelles la tâche agricole basée sur l'itinéraire de déplacement (L1) a été interrompue, et
enregistrer, dans la mémoire (53), une date et une heure de mise à jour (78) de telle sorte que la date et l'heure de mise à jour (78) sont incluses dans les données d'interruption (70) et associées aux informations d'identification du dispositif de travail (2) lorsque les informations de taille sont mises à jour, la date et l'heure de mise à jour (78) étant une date et une heure auxquelles les informations de taille ont été mises à jour, et
le dispositif de notification (51g) est configuré ou programmé pour, si la date et l'heure de mise à jour (78) incluses dans les données d'interruption (70) sont postérieures à la date et l'heure d'interruption (79) incluses dans les données d'interruption (70), fournir la première notification (U2) et/ou la seconde notification (U3) lorsque la tâche agricole doit être reprise sur la base des données d'interruption (70) comportant la date et l'heure de mise à jour (78).

7. Système d'assistance agricole (100) selon l'une quelconque des revendications 2 à 4, dans lequel le dispositif d'enregistrement (51e) est configuré ou programmé pour, lors de l'achèvement de la tâche agricole reprise sur la base des données d'interruption (70), remplacer, par les informations de taille mises à jour incluses dans les données d'interruption (70), les informations de taille qui sont un d'un ou plusieurs éléments parmi des informations de taille stockées dans la mémoire (53) et qui sont associées aux mêmes informations d'identification que celles du dispositif de travail (2) associées aux informations de taille mises à jour incluses dans les données d'interruption (70).

8. Système d'assistance agricole (100) selon l'une quelconque des revendications 2 à 7, comprenant en outre :
une unité d'affichage (52) pour afficher un contenu entré par l'intermédiaire de l'entrée (52), la carte (MP2), l'itinéraire de déplacement (L1) et un contenu de la première notification (U2) et/ou de la seconde notification (U3) fournies par le dispositif de notification (51g).

9. Système d'assistance agricole (100) selon l'une quelconque des revendications 1 à 8, comprenant en outre :
un détecteur de position (40) pour détecter une position de la machine agricole (1) ;
une sortie (54) pour émettre l'itinéraire de déplacement (L1) créé par le dispositif de création d'itinéraire (51c), et
un dispositif de commande de fonctionnement automatique (61) pour commander, sur la base de la position de la machine agricole (1) et de l'itinéraire de déplacement (L1), la machine agricole (1) afin qu'elle se déplace automatiquement et/ou qu'elle soit dirigée automatiquement et pour commander le dispositif de travail (2) afin qu'il soit entraîné pour réaliser la tâche agricole sur le champ agricole, dans lequel
le dispositif de commande de fonctionnement automatique (61) est configuré ou programmé pour, lorsque la tâche agricole basée sur l'itinéraire de déplacement (L1) ayant été interrompue est reprise, commander la machine agricole (1) afin qu'elle se déplace automatiquement et/ou soit dirigée automatiquement et commander le dispositif de travail (2) afin qu'il soit entraîné sur la base de la position de la machine agricole (1) détectée par le détecteur de position (40), de l'itinéraire de déplacement (L1) émis par l'intermédiaire de la sortie (54) et des données d'interruption (70) qui ont été enregistrées dans la mémoire (53) lorsque la tâche agricole a été interrompue.

10. Système d'assistance agricole (100) selon l'une quelconque des revendications 1 à 9, comprenant en outre :
la machine agricole (1), dans lequel
la machine agricole (1) comporte l'entrée (52), le dispositif de création d'itinéraire (51c), le détecteur d'état (51d), le dispositif d'enregistrement (51e) et le dispositif de notification (51g).

11. Système d'assistance agricole (100) selon la revendication 10, dans lequel la machine agricole (1) comporte une mémoire (53), une unité d'affichage (52), un détecteur de position (40) pour détecter une position de la machine agricole (1), et un dispositif de commande de fonctionnement automatique (61) pour commander, sur la base de la position de la machine agricole (1) et de l'itinéraire de déplacement (L1), la machine agricole (1) afin qu'elle se déplace automatiquement et/ou qu'elle soit dirigée automatiquement et pour commander le dispositif de travail (2) afin qu'il soit entraîné pour réaliser la tâche agricole sur le champ agricole.

12. Système d'assistance agricole (100) selon l'une quelconque des revendications 1 à 9, comprenant en outre un appareil d'assistance agricole (50) à installer dans ou sur la machine agricole (1), dans lequel
l'appareil d'assistance agricole (50) comporte l'entrée (52), le dispositif de création d'itinéraire (51c), le détecteur d'état (51d), le dispositif d'enregistrement (51e) et le dispositif de notification (51g).

13. Système d'assistance agricole (100) selon la revendication 12, dans lequel l'appareil d'assistance agricole (50) comporte une mémoire (53), une unité d'affichage (52) et une sortie (54) pour émettre l'itinéraire de déplacement (L1) créé par le dispositif de création d'itinéraire (51c) vers la machine agricole (1).
